(19) **Europäisches Patentamt / European Patent Office / Office européen des brevets**

(11) **EP 4 560 514 B1**

(12) # EUROPEAN PATENT SPECIFICATION

(45) Date of publication and mention
of the grant of the patent:
**08.07.2026 Bulletin 2026/28**

(21) Application number: **23211559.2**

(22) Date of filing: **22.11.2023**

(51) International Patent Classification (IPC):
**G06F 21/64** *(2013.01)* **H04L 9/32** *(2006.01)*
**H04L 9/00** *(2022.01)*

(52) Cooperative Patent Classification (CPC):
**G06F 21/64; H04L 9/3239; H04L 9/50**

(54) **BLOCKCHAIN NODE AND METHODS FOR BLOCK VALIDATION USING ARRAY TRANSACTION DATABASES**

BLOCKCHAIN-KNOTEN UND VERFAHREN ZUR BLOCKVALIDIERUNG UNTER VERWENDUNG VON ARRAY-TRANSAKTIONSDATENBANKEN

NOEUD DE CHAÎNE DE BLOCS ET PROCÉDÉS DE VALIDATION DE BLOCS À L'AIDE DE BASES DE DONNÉES DE TRANSACTION EN RÉSEAU

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**28.05.2025 Bulletin 2025/22**

(73) Proprietor: **Turing IP Holdings Ltd.**
**St. John (AG)**

(72) Inventor: **DUCROUX, Mathieu**
**London, W1W 8AP (GB)**

(74) Representative: **Page White Farrer**
**Bedford House**
**21a John Street**
**London WC1N 2BF (GB)**

(56) References cited:
**US-B2- 11 743 045**

- **ANDREAS M ANTONOPOULOS: "Mastering Bitcoin - Unlocking Digital Crypto-Currencies", O'REILLY, 1 December 2014 (2014-12-01), pages 1 - 282, XP055581333, Retrieved from the Internet <URL:https://unglueit-files.s3.amazonaws.com/ebf/05db7df4f31840f0a873d6ea14dcc28d.pdf> [retrieved on 20190416]**
- **ALEX MANUSKIN ET AL: "Ostraka: Secure Blockchain Scaling by Node Sharding", ARXIV.ORG, CORNELL UNIVERSITY LIBRARY, 201 OLIN LIBRARY CORNELL UNIVERSITY ITHACA, NY 14853, 16 September 2020 (2020-09-16), XP081762742**
- **VERMOREL JOANNES ET AL: "Canonical Transaction Ordering for Bitcoin", 12 June 2018 (2018-06-12), pages 1 - 8, XP055832884, Retrieved from the Internet <URL:https://blog.vermorel.com/pdf/canonical-tx-ordering-2018-06-12.pdf> [retrieved on 20210818]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

The present disclosure relates to blockchain networks and, in particular, to methods and devices for validating blocks involving large volume transaction flow.

**BACKGROUND**

A blockchain refers to a form of distributed data structure, wherein a duplicate copy of the blockchain is maintained at each of a plurality of nodes in a distributed peer-to-peer (P2P) network (referred to below as a "blockchain network") and widely publicised. The blockchain is formed from a chain of blocks of data, wherein each block includes one or more transactions. Each transaction, other than so-called "coinbase transactions", points back to a preceding transaction in a sequence which may span one or more blocks up until one or more coinbase transactions. Coinbase transactions are discussed below. Transactions that are submitted to the blockchain network are included in new blocks. New blocks are created by a process often referred to as "mining", which involves each of a plurality of the nodes competing to perform "proof-of-work", i.e. solving a cryptographic puzzle based on a representation of a defined set of ordered and validated pending transactions waiting to be included in a new block of the blockchain. It should be noted that the blockchain may be pruned at a node, and the publication of blocks can be achieved through the publication of mere block headers.

The transactions in the blockchain are used to perform one or more of the following: to convey a digital asset (i.e. a number of digital tokens), to order a set of journal entries in a virtualised ledger or registry, to receive and process timestamp entries, and/or to time-order index pointers. A blockchain can also be exploited in order to layer additional functionality on top of the blockchain. Blockchain protocols may allow for storage of additional user data or indexes to data in a transaction. There is no pre-specified limit to the maximum data capacity that can be stored within a single transaction, and therefore increasingly more complex data can be incorporated. For instance this may be used to store an electronic document in the blockchain, or audio or video data.

Nodes of the blockchain network (which are often referred to as "miners") perform a distributed transaction registration and verification process, which will be described in detail below. In summary, during this process a node validates transactions and inserts them into a block template for which they attempt to identify a valid proof-of-work solution. Once a valid solution is found, a new block is propagated to other nodes of the network, thus enabling each node to record the new block on the blockchain. In order to have a transaction recorded in the blockchain, a user (e.g. a blockchain client application) sends the transaction to one of the nodes of the network to be propagated. Nodes which receive the transaction may race to find a proof-of-work solution incorporating the validated transaction into a new block. Each node is configured to enforce the same node protocol, which will include one or more conditions for a transaction to be valid. Invalid transactions will not be propagated nor incorporated into blocks. Assuming the transaction is validated and thereby accepted onto the blockchain, then the transaction (including any user data) will thus remain registered and indexed at each of the nodes in the blockchain network as an immutable public record.

The node who successfully solved the proof-of-work puzzle to create the latest block is typically rewarded with a new transaction called the "coinbase transaction" which distributes an amount of the digital asset, i.e. a number of tokens. The detection and rejection of invalid transactions is enforced by the actions of competing nodes who act as agents of the network and are incentivised to report and block malfeasance. The widespread publication of information allows users to continuously audit the performance of nodes. The publication of the mere block headers allows participants to ensure the ongoing integrity of the blockchain.

In an "output-based" model (sometimes referred to as a UTXO-based model), the data structure of a given transaction includes one or more inputs and one or more outputs. Any spendable output includes an element specifying an amount of the digital asset that is derivable from the proceeding sequence of transactions. The spendable output is sometimes referred to as a UTXO ("unspent transaction output"). The output may further include a locking script specifying a condition for the future redemption of the output. A locking script is a predicate defining the conditions necessary to validate and transfer digital tokens or assets. Each input of a transaction (other than a coinbase transaction) includes a pointer (i.e. a reference) to such an output in a preceding transaction, and may further include an unlocking script for unlocking the locking script of the pointed-to output. Consider that a pair of transactions may be labelled a first and a second transaction (or "target" transaction). The first transaction includes at least one output specifying an amount of the digital asset, and having a locking script defining one or more conditions of unlocking the output. The second, target transaction has at least one input, including a pointer to the output of the first transaction, and an unlocking script for unlocking the output of the first transaction.

In such a model, when the second, target transaction is sent to the blockchain network to be propagated and recorded in the blockchain, one of the criteria for validity applied at each node will be that the unlocking script meets all of the one or more conditions defined in the locking script of the first transaction. Another will be that the output of the first transaction has not already been redeemed by another, earlier valid transaction. Any node that finds the target transaction invalid according to any of these conditions will not propagate it (as a valid transaction, but possibly to register an invalid transaction) nor include it in a new block to be recorded in the blockchain.

An alternative type of transaction model is an account-based model. In this case each transaction does not define the amount to be transferred by referring back to the UTXO of a preceding transaction in a sequence of past transactions, but rather by reference to an absolute account balance. The current state of all accounts is stored by the nodes separate to the blockchain and is updated constantly.

As blockchain technology is applied to larger and larger numbers of transactions, managing the volume of transactions become challenging. For example, common credit card payment networks, such as Mastercard or Visa's payment networks, collectively typically process thousands of transactions per second. It may be advantageous to have solutions that would enable a blockchain network to manage similar levels of throughput.

## BRIEF DESCRIPTION OF THE DRAWINGS

Reference will now be made, by way of example, to the accompanying drawings which show example embodiments of the present application and in which:

FIG. 1 shows an example system for implementing a blockchain;

FIG. 2 illustrates an example transaction protocol;

FIG. 3A shows an example implementation of a client application;

FIG. 3B shows an example of a user interface for the client application;

FIG. 4 illustrates example node software for a blockchain node;

FIG. 5 diagrammatically shows a simplified example blockchain node for processing a large volume of blockchain transactions;

FIG. 6 diagrammatically illustrates a set of related blockchain transactions that may be represented in a graph database;

FIG. 7 shows, in flowchart form, an example method for building a graph database for blockchain transactions to enable fast block validation;

FIG. 8 shows, in flowchart form, an example method of fast block validation using a transaction graph database;

FIG. 9 shows, in flowchart form, another method of fast block validation using a transaction graph database;

FIG. 10 shows, in flowchart form, an example method of building array transaction databases for each array to compactly store transaction input and output data crossing array boundaries; and

FIG. 11 shows an example set of blockchain transactions and their input-output relationships across blocks and arrays.

Like reference numerals are used in the drawings to denote like elements and features.

## DETAILED DESCRIPTION OF EXAMPLES

In one aspect, there may be provided a computer-implemented method of validating a newly-solved block for a blockchain by a node. The method may include receiving, during a mining phase, from another node, two or more arrays, each array containing a respective set of transaction identifiers; building a graph datastore containing the transactions contained in the two or more arrays received from the another node, the graph datastore having a vertex for each transaction and edges associated with one or more inputs to each transaction connecting that transaction to one or more outputs of one or more parent transactions; receiving notification of the newly-solved block from the another node, the notification specifying arrays included in the newly-solved block; and verifying whether an ordered list of transactions in the newly-solved block are topologically ordered by, for transactions in the ordered list, in turn, identifying that transaction in the graph datastore, determining whether its one or more parent transactions connected by one or more edges are marked visited, and marking that transaction as visited.

In some implementations, building includes determining that a parent transaction to a current transaction is not present in the graph datastore and, as a result, adding to the graph datastore a vertex for the parent transaction and an edge connecting the parent transaction to the current transaction. In some cases, building further includes determining that the parent transaction is contained in a previous block of the blockchain and, as a result, marking the vertex for the parent transaction as visited.

In some implementations, verifying includes determining, after processing each transaction in the ordered list, in turn, that each transaction in the newly-solved block is in the graph datastore and that its one or more parent transactions are marked visited and, as a result, determining that the newly-solved block is valid. In some cases, the method further includes adding the newly-solved block to the blockchain.

In some implementations, verifying includes determining, for one of the transactions in the ordered list, that at least one parent transaction is not marked visited and, as a result, determining that the newly-solved block is invalid.

In some implementations, verifying further includes partitioning the ordered list of transactions into slices and wherein the identifying, determining and marking for transactions in each slice are carried out in parallel. Marking may include marking that transaction as visited and marking it with a slice identifier or with an index position in the ordered list. Marking may include adding a slice identifier, and determining whether one or more parent transactions are marked visited may include determining whether the one or more parent transactions are marked by a slice identifier earlier in the ordered list than a current slice identifier containing a child transaction. Marking may include adding an index position indicating the position of that transaction within the ordered list, and determining whether one or more parent transactions are marked visited may include determining whether the one or more parent transactions are marked by a respective index position earlier in the ordered list than a current index position of a child transaction.

In some cases, determining whether one or more parent transactions are marked visited includes determining that at least one of the one or more parent transactions is not marked visited and, as a result, marking said at least of the one or more parent transactions as to-be-visited. In some cases, verifying includes determining, after all transactions have been processed, that at least one of the transactions is marked to-be-visited and, as a result, determining that the newly-solved block is invalid.

In some implementations, portioning includes identifying related transactions and assigning transactions to slices so as to group the related transactions into a same slice.

In a second aspect, the present application may provide a computer-implemented method of validating a newly-solved block for a blockchain by a node. The method may include receiving, during a mining phase, from another node, two or more arrays, each array containing a respective set of transaction identifiers; building an array transaction database for each array, including, for a first array: a list of inputs to transactions in the first array that come from outputs of transactions in arrays other than the first array, and a list of outputs generated by transactions in the first array that are not consumed by any transaction in the first array; receiving notification of the newly-solved block from the another node, the notification specifying arrays included in the newly-solved block; and verifying whether an ordered list of transactions in the newly-solved block are topologically ordered based on the array transaction databases.

In some implementations, building includes, for the first array, processing an ordered list of transactions in the first array in order, including adding newly-created outputs of each of the transactions to the list of outputs, determining that one or more of the newly-created outputs are used as inputs to one or more later transactions in the ordered list and, as a result, removing said one or more of the newly-created outputs from the list of outputs.

In some implementations, building further includes building a previous block output database recording a list of outputs created in previous blocks that are consumed by transactions in one of the arrays, and wherein verifying further includes determining that no double-spends are present in the ordered list of transactions based on the previously block output database. In some cases, building includes, for the first array, processing an ordered list of transactions in the first array in order, including determining that one of the inputs to one of the transactions is an output from a transaction in one of the previous blocks and, as a result, adding that output to the previous block output database.

In some implementations, building includes determining that an input to one of the transactions in the first array is not from another of the transactions in the first array or from one of the transactions in the previous blocks and, as a result, querying other arrays from the another node to locate the input in a transaction in one of the other arrays from the another node.

In some implementations, building includes determining that an input to one of the transactions in the first array comes from an output of a transaction in a different array and, as a result, adding the input to the input list together with an identifier for the different array. In some cases, the different array is associated with a second array transaction database that includes a second list of outputs generated by transactions in the second array, and wherein the method further comprises updating, in the second list of outputs, a field associated with the transaction in the different array to reference an identifier for the first array.

In some implementations, the receiving, during the mining phase, includes receiving the two or more arrays with data indicating an order of the two or more arrays and wherein the notification specifying arrays specifies a sequence that matches the order of the two or more arrays, and as a result, verifying includes determining that the newly-solved block is topologically ordered and valid. In some cases, determining that the newly-solved block is topologically ordered and valid includes adding the newly-solved block to the blockchain.

In some implementations, the receiving, during the mining phase, includes receiving the two or more arrays with data indicating an order of the two or more arrays and wherein the notification specifying arrays specifies a sequence that does not match the order of the two or more arrays and, as a result, verifying includes determining whether the transactions in the newly-solved block are topologically ordered based on the list of inputs and the list of outputs for each array transaction database.

In some implementations, each entry in the list of inputs to transactions in the first array includes a respective array identifier specifying which of the two or more arrays contains a parent transaction providing the respective input identified in that entry.

In some implementations, at least one entry in the list of outputs contains an array identifier specifying one of the two or more arrays in which a child transaction spends an output identified in the at least one entry.

In some implementations, the array transaction database for the first array includes the list of inputs and the list of outputs and excludes any outputs generated by transactions in the first array and consumed by other transactions in the first array.

In another aspect, there may be provided a computing device implementing a node on a blockchain. The computing device may include memory, one or more processors, and computer-executable instructions that, when executed, cause the processors to carry out one or more of the methods described herein.

In yet another aspect, there may be provided a computer-readable medium storing processor-executable instructions, the processor-executable instructions including instructions that, when executed by one or more processors, cause the processors to carry out at least one of the methods described herein.

Other example embodiments of the present disclosure will be apparent to those of ordinary skill in the art from a review of the following detailed description in conjunction with the drawings.

In the present application, the term "and/or" is intended to cover all possible combinations and sub-combinations of the listed elements, including any one of the listed elements alone, any sub-combination, or all of the elements, and without necessarily excluding additional elements.

In the present application, the phrase "at least one of... or..." is intended to cover any one or more of the listed elements, including any one of the listed elements alone, any sub-combination, or all of the elements, without necessarily excluding any additional elements, and without necessarily requiring all of the elements.

### *Example System Overview*

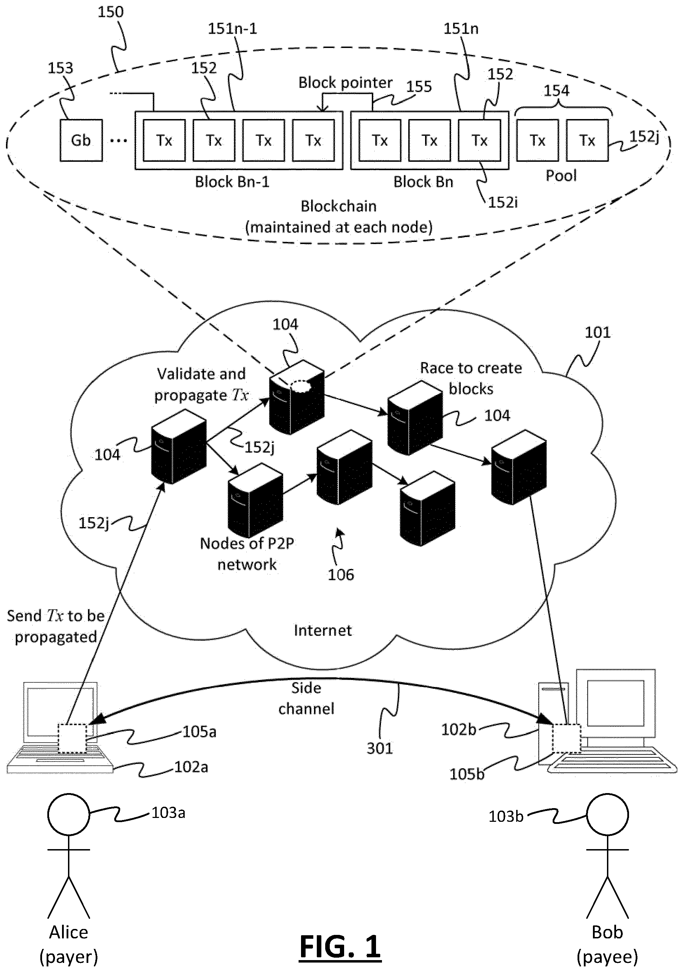

Figure 1 shows an example system 100 for implementing a blockchain 150. The system 100 may include a packet-switched network 101, typically a wide-area internetwork such as the Internet. The packet-switched network 101 includes a plurality of blockchain nodes 104 that may be arranged to form a peer-to-peer (P2P) network 106 within the packet-switched network 101. Whilst not illustrated, the blockchain nodes 104 may be arranged as a near-complete graph. Each blockchain node 104 is therefore highly connected to other blockchain nodes 104.

Each blockchain node 104 includes computer equipment of a peer, with different ones of the nodes 104 belonging to different peers. Each blockchain node 104 includes a processing apparatus implemented by one or more processors, e.g. one or more central processing units (CPUs), accelerator processors, application specific processors and/or field programmable gate arrays (FPGAs), and other equipment such as Application Specific Integrated Circuits (ASICs). Each node also includes memory, i.e. computer-readable storage in the form of a non-transitory computer-readable medium or media. The memory may include one or more memory units employing one or more memory media, e.g. a magnetic medium such as a hard disk; an electronic medium such as a solid-state drive (SSD), flash memory or EEPROM; and/or an optical medium such as an optical disk drive.

The blockchain 150 includes a chain of blocks of data 151, wherein a respective copy of the blockchain 150 is maintained at each of a plurality of blockchain nodes 104 in the distributed or blockchain network 160. As mentioned above, maintaining a copy of the blockchain 150 does not necessarily mean storing the blockchain 150 in full. Instead, the blockchain 150 may be pruned of data so long as each blockchain node 150 stores the blockheader (discussed below) of each block 151. Each block 151 in the chain includes one or more transactions 152, wherein a transaction in this context refers to a kind of data structure. The nature of the data structure will depend on the type of transaction protocol used as part of a transaction model or scheme. A given blockchain will use one particular transaction protocol throughout. In one common type of transaction protocol, the data structure of each transaction 152 has at least one input and at least one output. Each output specifies an amount representing a quantity of a digital asset as property, an example of which is a user 103 to whom the output is cryptographically locked (requiring a signature or other solution of that user in order to be unlocked and thereby redeemed or spent). Each input points back to the output of a preceding transaction 152, thereby linking the transactions.

Each block 151 also includes a block pointer 155 pointing back to the previously created block 151 in the chain so as to define a sequential order to the blocks 151. Each transaction 152 (other than a coinbase transaction) has a pointer back to a previous transaction so as to define an order to sequences of transactions (N.B. sequences of transactions 152 are allowed to branch). The chain of blocks 151 goes all the way back to a genesis block (Gb) 153 which was the first block in the chain. One or more original transactions 152 early on in the chain 150 pointed to the genesis block 153 rather than a preceding transaction.

Each of the blockchain nodes 104 is configured to forward transactions 152 to other blockchain nodes 104, and thereby cause transactions 152 to be propagated throughout the network 106. Each blockchain node 104 is configured to create blocks 151 and to store a respective copy of the same blockchain 150 in their respective memory. Each blockchain node 104 also maintains an ordered set 154 of transactions 152 waiting to be incorporated into blocks 151. The ordered set 154 is often referred to as a "mempool". This term herein is not intended to limit to any particular blockchain, protocol or model. It refers to the ordered set of transactions which a node 104 has accepted as valid and for which the node 104 is obliged not to accept any other transactions attempting to spend the same output.

In a given present transaction 152j, the (or each) input includes a pointer referencing the output of a preceding transaction 152i in the sequence of transactions, specifying that this output is to be redeemed or "spent" in the present transaction 152j. In general, the preceding transaction could be any transaction in the ordered set 154 or any block 151. The preceding transaction 152i need not necessarily exist at the time the present transaction 152j is created or even sent to the network 106, though the preceding transaction 152i will need to exist and be validated in order for the present transaction to be valid. Hence "preceding" herein refers to a predecessor in a logical sequence linked by pointers, not necessarily the time of creation or sending in a temporal sequence, and hence it does not necessarily exclude that the transactions 152i, 152j be created or sent out-of-order (see discussion below on orphan transactions). The preceding transaction 152i could equally be called the antecedent or predecessor transaction.

The input of the present transaction 152j also includes the input authorisation, for example the signature of the user 103a to whom the output of the preceding transaction 152i is locked. In turn, the output of the present transaction 152j can be cryptographically locked to a new user or entity 103b. The present transaction 152j can thus transfer the amount defined in the input of the preceding transaction 152i to the new user or entity 103b as defined in the output of the present transaction 152j. In some cases a transaction 152 may have multiple outputs to split the input amount between multiple users or entities (one of whom could be the original user or entity 103a in order to give change). In some cases a transaction can also have multiple inputs to gather together the amounts from multiple outputs of one or more preceding transactions, and redistribute to one or more outputs of the current transaction.

According to an output-based transaction protocol such as bitcoin, when an entity, such as a user or machine, 103 wishes to enact a new transaction 152j, then the entity sends the new transaction from its computer terminal 102 to a recipient. The entity or the recipient will eventually send this transaction to one or more of the blockchain nodes 104 of the network 106 (which nowadays are typically servers or data centres, but could in principle be other user terminals). It is also not excluded that the entity 103 enacting the new transaction 152j could send the transaction to one or more of the blockchain nodes 104 and, in some examples, not to the recipient. A blockchain node 104 that receives a transaction checks whether the transaction is valid according to a blockchain node protocol which is applied at each of the blockchain nodes 104. The blockchain node protocol typically requires the blockchain node 104 to check that a cryptographic signature in the new transaction 152j matches the expected signature, which depends on the previous transaction 152i in an ordered sequence of transactions 152. In such an output-based transaction protocol, this may include checking that the cryptographic signature or other authorisation of the entity 103 included in the input of the new transaction 152j matches a condition defined in the output of the preceding transaction 152i which the new transaction assigns, wherein this condition typically includes at least checking that the cryptographic signature or other authorisation in the input of the new transaction 152j unlocks the output of the previous transaction 152i to which the input of the new transaction is linked to. The condition may be at least partially defined by a script included in the output of the preceding transaction 152i. Alternatively it could simply be fixed by the blockchain node protocol alone, or it could be due to a combination of these. Either way, if the new transaction 152j is valid, the blockchain node 104 forwards it to one or more other blockchain nodes 104 in the blockchain network 106. These other blockchain nodes 104 apply the same test according to the same blockchain node protocol, and so forward the new transaction 152j on to one or more further nodes 104, and so forth. In this way the new transaction is propagated throughout the network of blockchain nodes 104.

In an output-based model, the definition of whether a given output (e.g. UTXO) is assigned is whether it has yet been validly redeemed by the input of another, onward transaction 152j according to the blockchain node protocol. Another condition for a transaction to be valid is that the output of the preceding transaction 152i which it attempts to assign or redeem has not already been assigned/redeemed by another transaction. Again if not valid, the transaction 152j will not be propagated (unless flagged as invalid and propagated for alerting) or recorded in the blockchain 150. This guards against double-spending whereby the transactor tries to assign the output of the same transaction more than once. An account-based model on the other hand guards against double-spending by maintaining an account balance. Because again there is a defined order of transactions, the account balance has a single defined state at any one time.

In addition to validating transactions, blockchain nodes 104 also race to be the first to create blocks of transactions in a process commonly referred to as mining, which is supported by "proof-of-work". At a blockchain node 104, new transactions are added to an ordered set 154 of valid transactions that have not yet appeared in a block 151 recorded on the blockchain 150. The blockchain nodes then race to assemble a new valid block 151 of transactions 152 from the ordered set of transactions 154 by attempting to solve a cryptographic puzzle. Typically this includes searching for a "nonce" value such that when the nonce is concatenated with a representation of the ordered set of transactions 154 and hashed, then the output of the hash meets a predetermined condition. For example, the predetermined condition may be that the output of the hash has a certain predefined number of leading zeros. Note that this is just one particular type of proof-of-work puzzle, and other types are not excluded. A property of a hash function is that it has an unpredictable output with respect to its input. Therefore this search can only be performed by brute force, thus consuming a substantive amount of processing resource at each blockchain node 104 that is trying to solve the puzzle.

The first blockchain node 104 to solve the puzzle announces this to the network 106, providing the solution as proof which can then be easily checked by the other blockchain nodes 104 in the network (once given the solution to a hash it is straightforward to check that it causes the output of the hash to meet the condition). The first blockchain node 104 propagates a block to a threshold consensus of other nodes that accept the block and thus enforce the protocol rules. The ordered set of transactions 154 then becomes recorded as a new block 151 in the blockchain 150 by each of the blockchain nodes 104. A block pointer 155 is also assigned to the new block 151n pointing back to the previously created block 151n-1 in the chain. A significant amount of effort, for example in the form of hash, required to create a proof-of-work solution signals the intent of the first node 104 to follow the rules of the blockchain protocol. Such rules include not accepting a transaction as valid if it assigns the same output as a previously validated transaction, otherwise known as double-spending. Once created, the block 151 cannot be modified since it is recognized and maintained at each of the blockchain nodes 104 in the blockchain network 106. The block pointer 155 also imposes a sequential order to the blocks 151. Since the transactions 152 are recorded in the ordered blocks at each blockchain node 104 in a network 106, this therefore provides an immutable public ledger of the transactions.

Note that different blockchain nodes 104 racing to solve the puzzle at any given time may be doing so based on different snapshots of the ordered set of yet to be published transactions 154 at any given time, depending on when they started searching for a solution or the order in which the transactions were received. Whoever solves their respective puzzle first defines which transactions 152 are included in the next new block 151n and in which order, and the current set 154 of unpublished transactions is updated. The blockchain nodes 104 then continue to race to create a block from the newly-defined outstanding ordered set of unpublished transactions 154, and so forth. A protocol also exists for resolving any "fork" that may arise, which is where two blockchain nodes 104 solve their puzzle within a very short time of one another such that a conflicting view of the blockchain gets propagated between nodes 104. In short, whichever prong of the fork grows the longest becomes the definitive blockchain 150. Note this should not affect the users or agents of the network as the same transactions will appear in both forks.

According to the bitcoin blockchain (and most other blockchains) a node that successfully constructs a new block 104 is granted the ability to assign an accepted amount of the digital asset in a new special kind of transaction which distributes a defined quantity of the digital asset (as opposed to an inter-agent, or inter-user transaction which transfers an amount of the digital asset from one agent or user to another). This special type of transaction is usually referred to as a "coinbase transaction", but may also be termed an "initiation transaction". It typically forms the first transaction of the new block 151n. The proof-of-work signals the intent of the node that constructs the new block to follow the protocol rules allowing this special transaction to be redeemed later. The blockchain protocol rules may require a maturity period, for example 100 blocks, before this special transaction may be redeemed. Often a regular (non-generation) transaction 152 will also specify an additional transaction fee in one of its outputs, to further reward the blockchain node 104 that created the block 151n in which that transaction was published. This fee is normally referred to as the "transaction fee", and is discussed blow.

Due to the resources involved in transaction validation and publication, typically at least each of the blockchain nodes 104 takes the form of a server that includes one or more physical server units, or even whole a data centre. However in principle any given blockchain node 104 could take the form of a user terminal or a group of user terminals networked together.

The memory of each blockchain node 104 stores software configured to run on the processing apparatus of the blockchain node 104 in order to perform its respective role or roles and handle transactions 152 in accordance with the blockchain node protocol. It will be understood that any action attributed herein to a blockchain node 104 may be performed by the software run on the processing apparatus of the respective computer equipment. The node software may be implemented in one or more applications at the application layer, or a lower layer such as the operating system layer or a protocol layer, or any combination of these.

Also connected to the network 101 is the computer equipment 102 of each of a plurality of parties 103 in the role of consuming users. These users may interact with the blockchain network but do not participate in validating, constructing or propagating transactions and blocks. Some of these users or agents 103 may act as senders and recipients in transactions. Other users may interact with the blockchain 150 without necessarily acting as senders or recipients. For instance, some parties may act as storage entities that store a copy of the blockchain 150 (e.g. having obtained a copy of the blockchain from a blockchain node 104).

Some or all of the parties 103 may be connected as part of a different network, e.g. a network overlaid on top of the blockchain network 106. Users of the blockchain network (often referred to as "clients") may be said to be part of a system that includes the blockchain network; however, these users are not blockchain nodes 104 as they do not perform the roles required of the blockchain nodes. Instead, each party 103 may interact with the blockchain network 106 and thereby utilize the blockchain 150 by connecting to (i.e. communicating with) a blockchain node 106. Two parties 103 and their respective equipment 102 are shown for illustrative purposes: a first party 103a and his/her respective computer equipment 102a, and a second party 103b and his/her respective computer equipment 102b. It will be understood that many more such parties 103 and their respective computer equipment 102 may be present and participating in the system 100, but for convenience they are not illustrated. Each party 103 may be an individual or an organization. Purely by way of illustration the first party 103a is referred to herein as Alice and the second party 103b is referred to as Bob, but it will be appreciated that this is not limiting and any reference herein to Alice or Bob may be replaced with "first party" and "second "party" respectively.

The computer equipment 102 of each party 103 comprises respective processing apparatus including one or more processors, e.g. one or more CPUs, GPUs, other accelerator processors, application specific processors, and/or FPGAs. The computer equipment 102 of each party 103 further includes memory, i.e. computer-readable storage in the form of a non-transitory computer-readable medium or media. This memory may include one or more memory units employing one or more memory media, e.g. a magnetic medium such as hard disk; an electronic medium such as an SSD, flash memory or EEPROM; and/or an optical medium such as an optical disc drive. The memory on the computer equipment 102 of each party 103 stores software such as a respective instance of at least one client application 105 arranged to run on the processing apparatus. It will be understood that any action attributed herein to a given party 103 may be performed using the software run on the processing apparatus of the respective computer equipment 102. The computer equipment 102 of each party 103 includes at least one user terminal, e.g. a desktop or laptop computer, a tablet, a smartphone, or a wearable device such as a smartwatch. The computer equipment 102 of a given party 103 may also include one or more other networked resources, such as cloud computing resources accessed via the user terminal.

The client application 105 may be initially provided to the computer equipment 102 of any given party 103 on suitable computer-readable storage medium or media, e.g. downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

The client application 105 includes at least a "wallet" function. This has two main functionalities. One of these is to enable the respective party 103 to create, authorise (for example sign) and send transactions 152 to one or more bitcoin nodes 104 to then be propagated throughout the network of blockchain nodes 104 and thereby included in the blockchain 150. The other is to report back to the respective party the amount of the digital asset that he or she currently owns. In an output-based system, this second functionality includes collating the amounts defined in the outputs of the various 152 transactions scattered throughout the blockchain 150 that belong to the party in question.

It will be understood that whilst the various client functionality may be described as being integrated into a given client application 105, this is not necessarily limiting and instead any client functionality described herein may instead be implemented in a suite of two or more distinct applications, e.g. interfacing via an API, or one being a plug-in to the other. More generally the client functionality could be implemented at the application layer or a lower layer such as the operating system, or any combination of these. The following will be described in terms of a client application 105 but it will be appreciated that this is not limiting.

The instance of the client application or software 105 on each computer equipment 102 is operatively coupled to at least one of the blockchain nodes 104 of the network 106. This enables the wallet function of the client 105 to send transactions 152 to the network 106. The client 105 is also able to contact blockchain nodes 104 in order to query the blockchain 150 for any transactions of which the respective party 103 is the recipient (or indeed inspect other parties' transactions in the blockchain 150, since in embodiments the blockchain 150 is a public facility which provides trust in transactions in part through its public visibility). The wallet function on each computer equipment 102 is configured to formulate and send transactions 152 according to a transaction protocol. As set out above, each blockchain node 104 runs software configured to validate transactions 152 according to the blockchain node protocol, and to forward transactions 152 in order to propagate them throughout the blockchain network 106. The transaction protocol and the node protocol correspond to one another, and a given transaction protocol goes with a given node protocol, together implementing a given transaction model. The same transaction protocol is used for all transactions 152 in the blockchain 150. The same node protocol is used by all the nodes 104 in the network 106.

When a given party 103, say Alice, wishes to send a new transaction 152j to be included in the blockchain 150, then she formulates the new transaction in accordance with the relevant transaction protocol (using the wallet function in her client application 105). She then sends the transaction 152 from the client application 105 to one or more blockchain nodes 104 to which she is connected. E.g. this could be the blockchain node 104 that is best connected to Alice's computer 102. When any given blockchain node 104 receives a new transaction 152j, it handles it in accordance with the blockchain node protocol and its respective role. This may include first checking whether the newly received transaction 152j meets a certain condition for being "valid", examples of which will be discussed in more detail shortly. In some transaction protocols, the condition for validation may be configurable on a per-transaction basis by scripts included in the transactions 152. Alternatively the condition could simply be a built-in feature of the node protocol, or be defined by a combination of the script and the node protocol.

On condition that the newly received transaction 152j passes the test for being deemed valid (i.e. on condition that it is "validated"), any blockchain node 104 that receives the transaction 152j will add the new validated transaction 152 to the ordered set of transactions 154 maintained at that blockchain node 104. Further, any blockchain node 104 that receives the transaction 152j will propagate the validated transaction 152 onward to one or more other blockchain nodes 104 in the network 106. Since each blockchain node 104 applies the same protocol, then assuming the transaction 152j is valid, this means it will soon be propagated throughout the whole network 106.

Once admitted to the ordered set of transactions 154 maintained at a given blockchain node 104, that blockchain node 104 will start competing to solve the proof-of-work puzzle on the latest version of their respective ordered set of transactions 154 including the new transaction 152 (recall that other blockchain nodes 104 may be trying to solve the puzzle based on a different ordered set of transactions 154, but whoever gets there first will define the ordered set of transactions that are included in the latest block 151, and eventually a blockchain node 104 will solve the puzzle for a part of the ordered set 154 which includes Alice's transaction 152j). Once the proof-of-work has been done for the ordered set 154 including the new transaction 152j, it immutably becomes part of one of the blocks 151 in the blockchain 150. Each transaction 152 includes a pointer back to an earlier transaction, so the order of the transactions is also immutably recorded.

Different blockchain nodes 104 may receive different instances of a given transaction first and therefore have conflicting views of which instance is 'valid' before one instance is published in a new block 151, at which point all blockchain nodes 104 agree that the published instance is the only valid instance. If a blockchain node 104 accepts one instance as valid, and then discovers that a second instance has been recorded in the blockchain 150 then that blockchain node 104 must accept this and will discard (i.e. treat as invalid) the instance which it had initially accepted (i.e. the one that has not been published in a block 151).

An alternative type of transaction protocol operated by some blockchain networks may be referred to as an "account-based" protocol, as part of an account-based transaction model. In the account-based case, each transaction does not define the amount to be transferred by referring back to the UTXO of a preceding transaction in a sequence of past transactions, but rather by reference to an absolute account balance. The current state of all accounts is stored, by the nodes of that network, separate to the blockchain and is updated constantly. In such a system, transactions are ordered using a running transaction tally of the account (also called the "position"). This value is signed by the sender as part of their cryptographic signature and is hashed as part of the transaction reference calculation. In addition, an optional data field may also be signed the transaction. This data field may point back to a previous transaction, for example if the previous transaction ID is included in the data field.

## UTXO-based Model

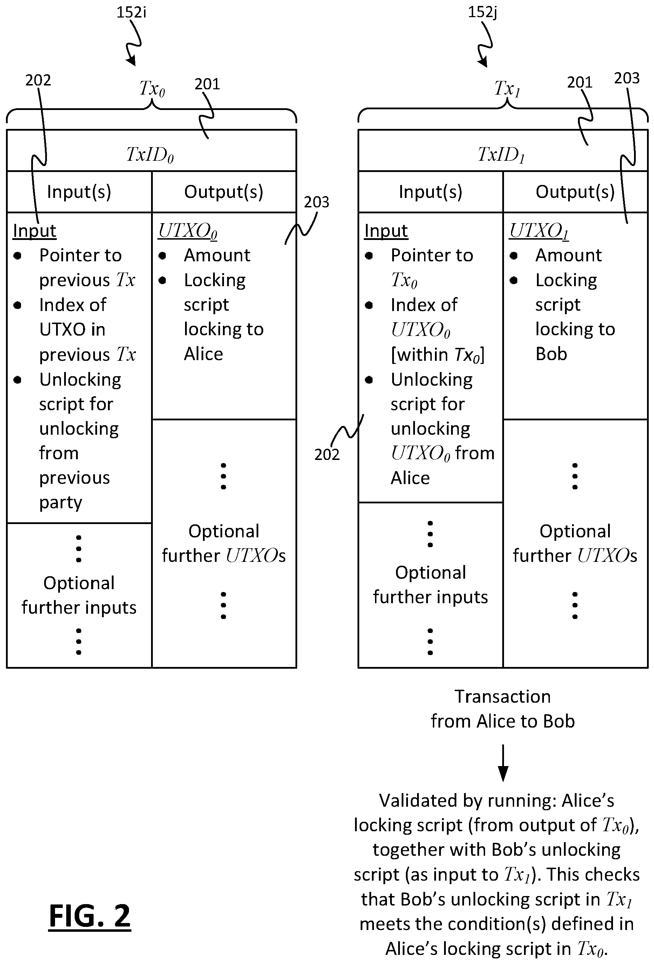

Figure 2 illustrates an example transaction protocol. This is an example of a UTXO-based protocol. A transaction 152 (abbreviated "Tx") is the fundamental data structure of the blockchain 150 (each block 151 containing one or more transactions 152). The following will be described by reference to an output-based or "UTXO" based protocol. However, this is not limiting to all possible embodiments. Note that while the example UTXO-based protocol is described with reference to bitcoin, it may equally be implemented on other example blockchain networks.

In a UTXO-based model, each transaction ("Tx") 152 is a data structure having one or more inputs 202, and one or more outputs 203. Each output 203 may include an unspent transaction output (UTXO), which can be used as the source for the input 202 of another new transaction (if the UTXO has not already been redeemed). The UTXO includes a value specifying an amount of a digital asset. This represents a set number of tokens on the distributed ledger. The UTXO may also contain the transaction ID of the transaction from which it came, amongst other information. The transaction data structure may also include a header 201, which may include an indicator of the size of the input field(s) 202 and output field(s) 203. The header 201 may also include an ID of the transaction. In some embodiments, the transaction ID is the hash of the transaction data (excluding the transaction ID itself) and stored in the header 201 of the raw transaction 152 submitted to the nodes 104.

Say Alice 103a wishes to create a transaction 152j transferring an amount of the digital asset in question to Bob 103b. In Figure 2 Alice's new transaction 152j is labelled "$Tx_1$". It takes an amount of the digital asset that is locked to Alice in the output 203 of a preceding transaction 152i in the sequence, and transfers at least some of this to Bob. The preceding transaction 152i is labelled *"Tx<sub>0</sub>"* in Figure 2. $Tx_0$ and $Tx_1$ are just arbitrary labels. They do not necessarily mean that $Tx_0$ is the first transaction in the blockchain 151, nor that $Tx_1$ is the immediate next transaction in the pool 154. $Tx_1$ could point back to any preceding (i.e. antecedent) transaction that still has an unspent output 203 locked to Alice.

The preceding transaction $Tx_0$ may already have been validated and included in a block 151 of the blockchain 150 at the time when Alice creates her new transaction $Tx_1$, or at least by the time she sends it to the network 106. It may already have been included in one of the blocks 151 at that time, or it may be still waiting in the ordered set 154 in which case it will soon be included in a new block 151. Alternatively $Tx_0$ and $Tx_1$ could be created and sent to the network 106 together, or $Tx_0$ could even be sent after $Tx_1$ if the node protocol allows for buffering "orphan" transactions. The terms "preceding" and "subsequent" as used herein in the context of the sequence of transactions refer to the order of the transactions in the sequence as defined by the transaction pointers specified in the transactions (which transaction points back to which other transaction, and so forth). They could equally be replaced with "predecessor" and "successor", or "antecedent" and "descendant", "parent" and "child", or such like. It does not necessarily imply an order in which they are created, sent to the network 106, or arrive at any given blockchain node 104. Nevertheless, a subsequent transaction (the descendent transaction or "child") which points to a preceding transaction (the antecedent transaction or "parent") will not be validated until and unless the parent transaction is validated. A child that arrives at a blockchain node 104 before its parent is considered an orphan. It may be discarded or buffered for a certain time to wait for the parent, depending on the node protocol and/or node behaviour.

One of the one or more outputs 203 of the preceding transaction $Tx_0$ is a particular UTXO, labelled here $UTXO_0$. Each UTXO includes a value specifying an amount of the digital asset represented by the UTXO, and a locking script which defines a condition which must be met by an unlocking script in the input 202 of a subsequent transaction in order for the subsequent transaction to be validated, and therefore for the UTXO to be successfully redeemed. Typically the locking script locks the amount to a particular party (the beneficiary of the transaction in which it is included). That is, the locking script defines an unlocking condition, typically include a condition that the unlocking script in the input of the subsequent transaction include the cryptographic signature of the party to whom the preceding transaction is locked.

The locking script (aka scriptPubKey) is a piece of code written in the domain specific language recognized by the node protocol. A particular example of such a language is called "Script" (capital S) which is used by the blockchain network. The locking script specifies what information is required to spend a transaction output 203, for example the requirement of Alice's signature. Unlocking scripts appear in the outputs of transactions. The unlocking script (aka scriptSig) is a piece of code written the domain specific language that provides the information required to satisfy the locking script criteria. For example, it may contain Bob's signature. Unlocking scripts appear in the input 202 of transactions.

So in the example illustrated, $UTXO_0$ in the output 203 of $Tx_0$ includes a locking script [Checksig $P_A$] which requires a signature Sig $P_A$ of Alice in order for $UTXO_0$ to be redeemed (strictly, in order for a subsequent transaction attempting to redeem $UTXO_0$ to be valid). [Checksig $P_A$] contains a representation (i.e. a hash) of the public key $P_A$ from a public-private key pair of Alice. The input 202 of $Tx_1$ includes a pointer pointing back to $Tx_0$ (e.g. by means of its transaction ID, $TxID_0$, which in some embodiments is the hash of the whole transaction $Tx_0$). The input 202 of $Tx_1$ includes an index identifying $UTXO_0$ within $Tx_0$, to identify it amongst any other possible outputs of $Tx_0$. The input 202 of $Tx_1$ further includes an unlocking script <Sig $P_A$> which has a cryptographic signature of Alice, created by Alice applying her private key from the key pair to a predefined portion of data (sometimes called the "message" in cryptography). The data (or "message") that needs to be signed by Alice to provide a valid signature may be defined by the locking script, or by the node protocol, or by a combination of these.

When the new transaction $Tx_1$ arrives at a blockchain node 104, the node applies the node protocol. This may include running the locking script and unlocking script together to check whether the unlocking script meets the condition defined in the locking script (where this condition may include one or more criteria). In some embodiments this may involve concatenating the two scripts:

$$<\text{Sig } P_A> <P_A> \| [\text{Checksig } P_A]$$

where "‖" represents a concatenation and "<...>" means place the data on the stack, and "[...]" is a function carried out by the locking script (in this example a stack-based language). Equivalently the scripts may be run one after the other, with a common stack, rather than concatenating the scripts. Either way, when run together, the scripts use the public key $P_A$ of Alice, as included in the locking script in the output of $Tx_0$, to authenticate that the unlocking script in the input of $Tx_1$ contains the signature of Alice signing the expected portion of data. The expected portion of data itself (the "message") also needs to be included in order to perform this authentication. In embodiments the signed data includes the whole of $Tx_1$ (so a separate element does not need to be included specifying the signed portion of data in the clear, as it is already inherently present).

The details of authentication by public-private cryptography will be familiar to a person skilled in the art. Basically, if Alice has signed a message using her private key, then given Alice's public key and the message in the clear, another entity such as a node 104 is able to authenticate that the message must have been signed by Alice. Signing typically includes hashing the message, signing the hash, and tagging this onto the message as a signature, thus enabling any holder of the public key to authenticate the signature. Note therefore that any reference herein to signing a particular piece of data or part of a transaction, or such like, can in embodiments mean signing a hash of that piece of data or part of the transaction.

If the unlocking script in $Tx_1$ meets the one or more conditions specified in the locking script of $Tx_0$ (so in the example shown, if Alice's signature is provided in $Tx_1$ and authenticated), then the blockchain node 104 deems $Tx_1$ valid. This means that the blockchain node 104 will add $Tx_1$ to the ordered set of transactions 154. The blockchain node 104 will also forward the transaction $Tx_1$ to one or more other blockchain nodes 104 in the network 106, so that it will be propagated throughout the network 106. Once $Tx_1$ has been validated and included in the blockchain 150, this defines $UTXO_0$ from $Tx_0$ as spent. Note that $Tx_1$ can only be valid if it spends an unspent transaction output 203. If it attempts to spend an output that has already been spent by another transaction 152, then $Tx_1$ will be invalid even if all the other conditions are met. Hence the blockchain node 104 also needs to check whether the referenced UTXO in the preceding transaction $Tx_0$ is already spent (i.e. whether it has already formed a valid input to another valid transaction). This is one reason why it is important for the blockchain 150 to impose a defined order on the transactions 152. In practice, a given blockchain node 104 may maintain a separate database marking which UTXOs 203 in which transactions 152 have been spent, but ultimately what defines whether a UTXO has been spent is whether it has already formed a valid input to another valid transaction in the blockchain 150.

If the total amount specified in all the outputs 203 of a given transaction 152 is greater than the total amount pointed to by all its inputs 202, this is another basis for invalidity in most transaction models. Therefore such transactions will not be propagated nor included in a block 151.

Note that in UTXO-based transaction models, a given UTXO needs to be spent as a whole. It cannot "leave behind" a fraction of the amount defined in the UTXO as spent while another fraction is spent. However, the amount from the UTXO can be split between multiple outputs of the next transaction. For example, the amount defined in $UTXO_0$ in $Tx_0$ can be split between multiple UTXOs in $Tx_1$. Hence if Alice does not want to give Bob all of the amount defined in $UTXO_0$, she can use the remainder to give herself change in a second output of $Tx_1$, or pay another party.

In practice Alice will also usually need to include a fee for the bitcoin node that publishes her transaction 104. If Alice does not include such a fee, $Tx_0$ may be rejected by the blockchain nodes 104, and hence although technically valid, may not be propagated and included in the blockchain 150 (the node protocol does not force blockchain nodes 104 to accept transactions 152 if they don't want). In some protocols, the transaction fee does not require its own separate output 203 (i.e. does not need a separate UTXO). Instead any difference between the total amount pointed to by the input(s) 202 and the total amount of specified in the output(s) 203 of a given transaction 152 is automatically given to the blockchain node 104 publishing the transaction. For example, say a pointer to $UTXO_0$ is the only input to $Tx_1$, and $Tx_1$ has only one output $UTXO_1$. If the amount of the digital asset specified in $UTXO_0$ is greater than the amount specified in $UTXO_1$, then the difference may be assigned by the node 104 that publishes the block containing $UTXO_1$. Alternatively or additionally however, it is not necessarily excluded that a transaction fee could be specified explicitly in its own one of the UTXOs 203 of the transaction 152.

Alice and Bob's digital assets consist of the UTXOs locked to them in any transactions 152 anywhere in the blockchain 150. Hence, typically, the assets of a given party 103 are scattered throughout the UTXOs of various transactions 152 throughout the blockchain 150. There is no one number stored anywhere in the blockchain 150 that defines the total balance of a given party 103. It is the role of the wallet function in the client application 105 to collate together the values of all the various UTXOs which are locked to the respective party and have not yet been spent in another onward transaction. It can do this by querying the copy of the blockchain 150 as stored at any of the bitcoin nodes 104.

Note that the script code is often represented schematically (i.e. not using the exact language). For example, one may use operation codes (opcodes) to represent a particular function. "OP_..." refers to a particular opcode of the Script language. As an example, OP_RETURN is an opcode of the Script language that when preceded by OP_FALSE at the beginning of a locking script creates an unspendable output of a transaction that can store data within the transaction, and thereby record the data immutably in the blockchain 150. For example, the data could include a document which it is desired to store in the blockchain.

Typically an input of a transaction contains a digital signature corresponding to a public key $P_A$. In embodiments this is based on the ECDSA using the elliptic curve secp256k1. A digital signature signs a particular piece of data. In some embodiments, for a given transaction the signature will sign part of the transaction input, and some or all of the transaction outputs. The particular parts of the outputs it signs depends on the SIGHASH flag. The SIGHASH flag is usually a 4-byte code included at the end of a signature to select which outputs are signed (and thus fixed at the time of signing).

The locking script is sometimes called "scriptPubKey" referring to the fact that it typically includes the public key of the party to whom the respective transaction is locked. The unlocking script is sometimes called "scriptSig" referring to the fact that it typically supplies the corresponding signature. However, more generally it is not essential in all applications of a blockchain 150 that the condition for a UTXO to be redeemed includes authenticating a signature. More generally the scripting language could be used to define any one or more conditions. Hence the more general terms "locking script" and "unlocking script" may be preferred.

As shown in Figure 1, the client application on each of Alice and Bob's computer equipment 102a, 120b, respectively, may include additional communication functionality. This additional functionality enables Alice 103a to establish a separate side channel 301 with Bob 103b (at the instigation of either party or a third party). The side channel 301 enables exchange of data separately from the blockchain network. Such communication is sometimes referred to as "off-chain" communication. For instance this may be used to exchange a transaction 152 between Alice and Bob without the transaction (yet) being registered onto the blockchain network 106 or making its way onto the chain 150, until one of the parties chooses to broadcast it to the network 106. Sharing a transaction in this way is sometimes referred to as sharing a "transaction template". A transaction template may lack one or more inputs and/or outputs that are required in order to form a complete transaction. Alternatively or additionally, the side channel 301 may be used to exchange any other transaction related data, such as keys, negotiated amounts or terms, data content, etc.

The side channel 301 may be established via the same packet-switched network 101 as the blockchain network 106. Alternatively or additionally, the side channel 301 may be established via a different network such as a mobile cellular network, or a local area network such as a local wireless network, or even a direct wired or wireless link between Alice and Bob's devices 102a, 102b. Generally, the side channel 301 as referred to anywhere herein may include any one or more links via one or more networking technologies or communication media for exchanging data "off-chain", i.e. separately from the blockchain network 106. Where more than one link is used, then the bundle or collection of off-chain links as a whole may be referred to as the side channel 301. Note therefore that if it is said that Alice and Bob exchange certain pieces of information or data, or such like, over the side channel 301, then this does not necessarily imply all these pieces of data have to be send over exactly the same link or even the same type of network.

## Client Software

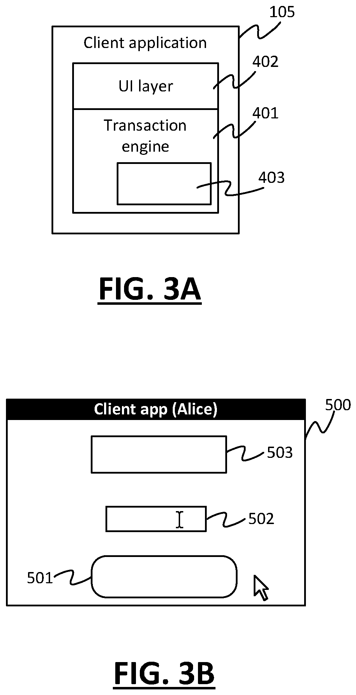

Figure 3A illustrates an example implementation of the client application 105 for implementing embodiments of the presently disclosed scheme. The client application 105 may include a transaction engine 401 and a user interface (UI) layer 402. The transaction engine 401 is configured to implement the underlying transaction-related functionality of the client 105, such as to formulate transactions 152, receive and/or send transactions and/or other data over the side channel 301, and/or send transactions to one or more nodes 104 to be propagated through the blockchain network 106, in accordance with the processes discussed above.

The UI layer 402 is configured to render a user interface via a user input/output (I/O) means of the respective user's computer equipment 102, including outputting information to the respective user 103 via a user output means of the equipment 102, and receiving inputs back from the respective user 103 via a user input means of the equipment 102. For example the user output means could include one or more display screens (touch or non-touch screen) for providing a visual output, one or more speakers for providing an audio output, and/or one or more haptic output devices for providing a tactile output, etc. The user input means could include for example the input array of one or more touch screens (the same or different as that/those used for the output means); one or more cursor-based devices such as mouse, trackpad or trackball; one or more microphones and speech or voice recognition algorithms for receiving a speech or vocal input; one or more gesture-based input devices for receiving the input in the form of manual or bodily gestures; or one or more mechanical buttons, switches or joysticks, etc.

Note that whilst the various functionality herein may be described as being integrated into the same client application 105, this is not necessarily limiting and instead they could be implemented in a suite of two or more distinct applications, e.g. one being a plug-in to the other or interfacing via an API (application programming interface). For instance, the functionality of the transaction engine 401 may be implemented in a separate application than the UI layer 402, or the functionality of a given module such as the transaction engine 401 could be split between more than one application. Nor is it excluded that some or all of the described functionality could be implemented at, say, the operating system layer. Where reference is made anywhere herein to a single or given application 105, or such like, it will be appreciated that this is just by way of example, and more generally the described functionality could be implemented in any form of software.

Figure 3B gives a mock-up of an example of the user interface (UI) 500 which may be rendered by the UI layer 402 of the client application 105a on Alice's equipment 102a. It will be appreciated that a similar UI may be rendered by the client 105b on Bob's equipment 102b, or that of any other party.

By way of illustration Figure 3B shows the UI 500 from Alice's perspective. The UI 500 may include one or more UI elements 501, 502, 502 rendered as distinct UI elements via the user output means.

For example, the UI elements may include one or more user-selectable elements 501 which may be, such as different on-screen buttons, or different options in a menu, or such like. The user input means is arranged to enable the user 103 (in this case Alice 103a) to select or otherwise operate one of the options, such as by clicking or touching the UI element on-screen, or speaking a name of the desired option (N.B. the term "manual" as used herein is meant only to contrast against automatic, and does not necessarily limit to the use of the hand or hands).

Alternatively or additionally, the UI elements may include one or more data entry fields 502. These data entry fields 502 are rendered via the user output means, e.g. on-screen, and the data can be entered into the fields through the user input means, e.g. a keyboard or touchscreen. Alternatively the data could be received orally for example based on speech recognition.

Alternatively or additionally, the UI elements may include one or more information elements 503 output to output information to the user. For example, the information could be rendered on screen or audibly.

It will be appreciated that the particular means of rendering the various UI elements, selecting the options and entering data is not material. The functionality of these UI elements will be discussed in more detail shortly. It will also be appreciated that the UI 500 shown in Figure 3B is only a schematized mock-up and in practice it may include one or more further UI elements, which for conciseness are not illustrated.

### Node Software

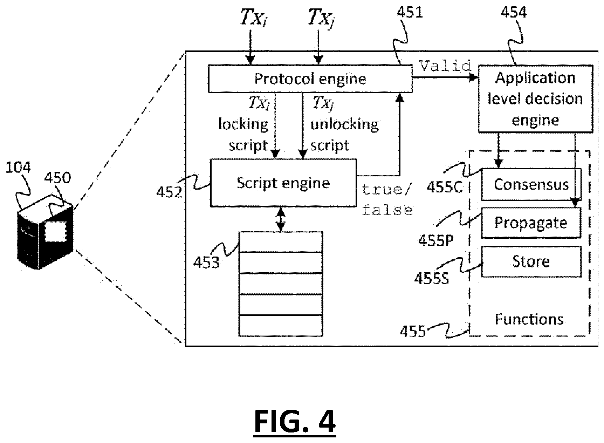

Figure 4 illustrates an example of the node software 450 that is run on each blockchain node 104 of the network 106, in the example of a UTXO- or output-based model. Note that another entity may run node software 450 without being classed as a node 104 on the network 106, i.e. without performing the actions required of a node 104. The node software 450 may contain, but is not limited to, a protocol engine 451, a script engine 452, a stack 453, an application-level decision engine 454, and a set of one or more blockchain-related functional modules 455. Each node 104 may run node software that contains, but is not limited to, all three of: a consensus module 455C (for example, proof-of-work), a propagation module 455P and a storage module 455S (for example, a database). The protocol engine 401 is typically configured to recognize the different fields of a transaction 152 and process them in accordance with the node protocol. When a transaction 152j ($Tx_j$) is received having an input pointing to an output (e.g. UTXO) of another, preceding transaction 152i ($Tx_{m-1}$), then the protocol engine 451 identifies the unlocking script in $Tx_j$ and passes it to the script engine 452. The protocol engine 451 also identifies and retrieves $Tx_i$ based on the pointer in the input of $Tx_j$. $Tx_i$ may be published on the blockchain 150, in which case the protocol engine may retrieve $Tx_i$ from a copy of a block 151 of the blockchain 150 stored at the node 104. Alternatively, $Tx_i$ may yet to have been published on the blockchain 150. In that case, the protocol engine 451 may retrieve $Tx_i$ from the ordered set 154 of unpublished transactions maintained by the node104. Either way, the script engine 451 identifies the locking script in the referenced output of $Tx_i$ and passes this to the script engine 452.

The script engine 452 thus has the locking script of $Tx_i$ and the unlocking script from the corresponding input of $Tx_j$. For example, transactions labelled $Tx_0$ and $Tx_1$ are illustrated in Figure 2, but the same could apply for any pair of transactions. The script engine 452 runs the two scripts together as discussed previously, which will include placing data onto and retrieving data from the stack 453 in accordance with the stack-based scripting language being used (e.g. Script).

By running the scripts together, the script engine 452 determines whether or not the unlocking script meets the one or more criteria defined in the locking script - i.e. does it "unlock" the output in which the locking script is included? The script engine 452 returns a result of this determination to the protocol engine 451. If the script engine 452 determines that the unlocking script does meet the one or more criteria specified in the corresponding locking script, then it returns the result "true". Otherwise it returns the result "false".

In an output-based model, the result "true" from the script engine 452 is one of the conditions for validity of the transaction. Typically there are also one or more further, protocol-level conditions evaluated by the protocol engine 451 that must be met as well; such as that the total amount of digital asset specified in the output(s) of $Tx_j$ does not exceed the total amount pointed to by its inputs, and that the pointed-to output of $Tx_i$ has not already been spent by another valid transaction. The protocol engine 451 evaluates the result from the script engine 452 together with the one or more protocol-level conditions, and only if they are all true does it validate the transaction $Tx_j$. The protocol engine 451 outputs an indication of whether the transaction is valid to the application-level decision engine 454. Only on condition that $Tx_j$ is indeed validated, the decision engine 454 may select to control both of the consensus module 455C and the propagation module 455P to perform their respective blockchain-related function in respect of $Tx_j$. This may include the consensus module 455C adding $Tx_j$ to the node's respective ordered set of transactions 154 for incorporating in a block 151, and the propagation module 455P forwarding $Tx_j$ to another blockchain node 104 in the network 106. Optionally, in embodiments the application-level decision engine 454 may apply one or more additional conditions before triggering either or both of these functions. For example, the decision engine may only select to publish the transaction on condition that the transaction is both valid and leaves enough of a transaction fee.

Note also that the terms "true" and "false" herein do not necessarily limit to returning a result represented in the form of only a single binary digit (bit), though that is certainly one possible implementation. More generally, "true" can refer to any state indicative of a successful or affirmative outcome, and "false" can refer to any state indicative of an unsuccessful or non-affirmative outcome. For instance in an account-based model, a result of "true" could be indicated by a combination of an implicit, protocol-level validation of a signature and an additional affirmative output of a smart contract (the overall result being deemed to signal true if both individual outcomes are true).

Other variants or use cases of the disclosed techniques may become apparent to the person skilled in the art once given the disclosure herein. The scope of the disclosure is not limited by the described embodiments but only by the accompanying claims.

For instance, some embodiments above have been described in terms of a bitcoin network 106, bitcoin blockchain 150 and bitcoin nodes 104. However it will be appreciated that the bitcoin blockchain is one particular example of a blockchain 150 and the above description may apply generally to any blockchain. That is, the present invention is in by no way limited to the bitcoin blockchain. More generally, any reference above to bitcoin network 106, bitcoin blockchain 150 and bitcoin nodes 104 may be replaced with reference to a blockchain network 106, blockchain 150 and blockchain node 104 respectively. The blockchain, blockchain network and/or blockchain nodes may share some or all of the described properties of the bitcoin blockchain 150, bitcoin network 106 and bitcoin nodes 104 as described above.

In some embodiments of the invention, the blockchain network 106 is the bitcoin network and bitcoin nodes 104 perform at least all of the described functions of creating, publishing, propagating and storing blocks 151 of the blockchain 150. It is not excluded that there may be other network entities (or network elements) that only perform one or some but not all of these functions. That is, a network entity may perform the function of propagating and/or storing blocks without creating and publishing blocks (recall that these entities are not considered nodes of the preferred bitcoin network 106).

In some other embodiments of the invention, the blockchain network 106 may not be the bitcoin network. In these embodiments, it is not excluded that a node may perform at least one or some but not all of the functions of creating, publishing, propagating and storing blocks 151 of the blockchain 150. For instance, on those other blockchain networks a "node" may be used to refer to a network entity that is configured to create and publish blocks 151 but not store and/or propagate those blocks 151 to other nodes.

Even more generally, any reference to the term "bitcoin node" 104 above may be replaced with the term "network entity" or "network element", wherein such an entity/element is configured to perform some or all of the roles of creating, publishing, propagating and storing blocks. The functions of such a network entity/element may be implemented in hardware in the same way described above with reference to a blockchain node 104.

### *Large volume transaction handling*

As the capacity of the network grows to accommodate larger numbers of transactions, nodes will need to adapt to handling significant flows of transactions. In some possible scenarios, the flow of new transactions may grow to tens of thousands, hundreds of thousands, even millions of transactions per second.

One of the mechanisms for addressing the challenge of large volumes and large blocks is to have nodes pre-propagate their candidate blocks prior to finding a solution. In this manner, once a block solution is found, the successful node need only send the solution details, *e.g.* the coinbase transaction, the Merkle root, the nonce, etc., instead of sending the full ordered list of TxIDs. Other nodes can then validate the solution based on the already-received ordered list of TxIDs.

To address the issue of large constant influx of new transactions, nodes may engage in dynamic transaction validation and block assembly in which the node builds successive arrays of ordered transactions, and the candidate block being mined at that node is made up of the arrays. As new arrays are completed, they are added to the candidate block. Meanwhile, the node propagates its completed arrays to other nodes. When a block solution is found, the node sends the solution details and an ordered list of array identifiers that specify the order of the arrays in the solved block. In this manner, the other nodes can quickly assemble the solved block from the arrays previously received from that node, and then engaged in validating the block solution.

It will be appreciated that in the array-based solution described above, a node will receive a number of arrays from other nodes that reflect the arrays built by those nodes and on which they are conducting mining operations. The node will therefore maintaining a record of the arrays from each node. In order to speed block validation, the node may be configured to do some validation work in advance of announcement of a block solution. Block assembly and validation are potential bottlenecks to be addressed in the case of large volume transaction flow. There are certain things that block validation involves, including verifying that: (1) transaction inputs are valid (e.g. they reference an existing output and their unlocking script is valid); (2) transactions are not double-spends of outputs from previous blocks; (3) transactions are not double-spends of outputs in the current block; and (4) transactions are topologically ordered. Topological ordering mandates that a transaction in a block that spends an output from another transaction in the same block must appear later in the order, *i.e.* a child transaction must appear after its parents in the ordered set of transactions in a block. The solutions presented below address this issue while also ensuring sufficient flexibility to account for a block solution that has arrays in a different order than they were originally communicated. It may also improve scalability to carry out at least some of the validation checks in advance of a solution being found. Preprocessing of arrays can be delegated to separate processors, enabling horizontal scaling.

In accordance with one aspect, a block validation service is implemented in which pre-processing of the received arrays is carried out to enable fast block validation. A database of transactions and/or databases of arrays may be built based on incoming arrays from other nodes, with entries in the database annotated such that when a solution is found the node can quickly verify the topological ordering of transactions in the block solution. Incoming transactions, whether received from other nodes or form other network sources, are validated using a transaction validation service to ensure they are compliant with the applicable blockchain protocol. The block validation service therefore operates on validated transactions. If an array is received from another node and it contains a transaction not previously received by the node, then it obtains a copy of the transaction from the another node, validates it, and adds it to its transaction database.

At least two approaches are described below. In a first aspect, validated transactions are added to a transaction graph datastore that represents each transaction as a vertex with edges extending to parent transactions. A vertex is crated for each parent transaction if not already present in the graph datastore. If the parent is located in a previously-mined block, then it is marked "visited". When a block solution is found and announced by another node, the current node loads the ordered set of transactions from the arrays previously-received from the another node and uses its transaction graph datastore to verify topological ordering and to detect any double-spending.

In a second aspect, instead of building a single transaction graph database the current node may build a separate array database for each array received from another node. The array database is compressed or reduced information regarding the array. In a particular example, the array database may be constructed to list inputs consumed in the array that originate as outputs from other blocks or other arrays, and to list outputs generated in the array and not consumed by any transaction in the array. That is, the array transaction database excludes output generated by transactions in the array that are also consumed as inputs to other transactions in the array. Once a block solution is announced by another node, the current node may quickly verify that the ordered set of arrays result in topological ordering of transactions based on whether the inputs/outputs from the array database indicate that any of the parents of a child transaction appear after the child in the order.

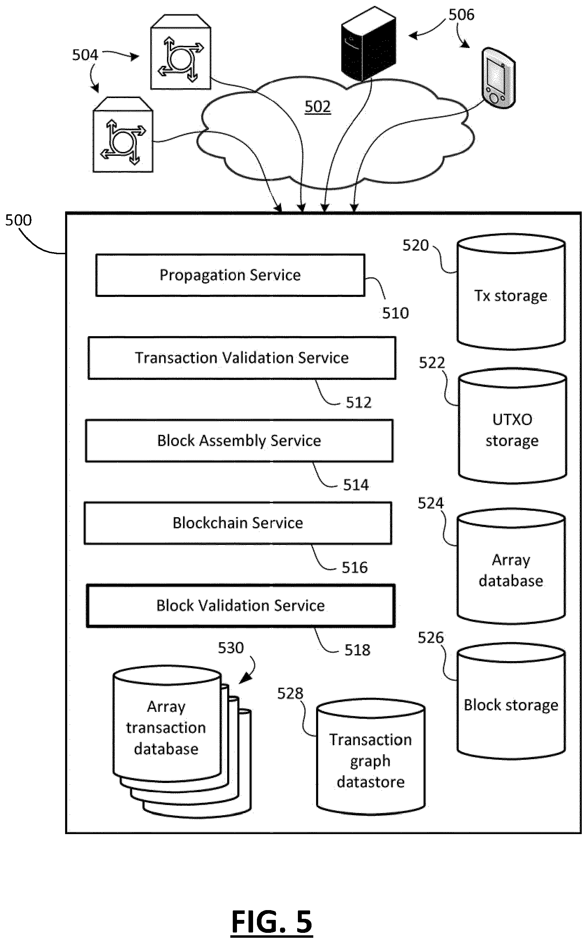

Reference will now be made to Figure 5, which diagrammatically shows a simplified example blockchain node 550 for processing a large volume of blockchain transactions. In this example, the node 550 is shown as a single device; however, it will be appreciated that the node 550 may be implemented using one or a plurality of computing devices. The computing devices include one or more processors, memory, internal communications busses, and external network communication subsystems, among other systems.

The blockchain node 550 is configured for communication over one or more computer networks 552. The computer networks 552 may include a peer-to-peer computer network, such as a blockchain network interconnecting blockchain nodes, such as other blockchain nodes 504. The computer networks 552 may include public and/or private computing networks, including the Internet. In some cases, the computer networks 552 may support multicast communications. The computer networks 552 may enable communications from user devices 506, such as end user computing or edge devices that may generate and send blockchain transactions or queries. The user devices may include mobile devices, point-of-sale devices, merchant computing systems, e-commerce platforms, financial services platforms, payment processing systems, and other such systems or devices.

The blockchain node 550 may implement a number of services, including a propagation service 510, a transaction validation service 512, a block assembly service 514, a blockchain service 516 and a block validation service 518. Some or all of these service may be horizontally scalable.

In addition, the blockchain node 550 may maintain or have access to certain stored data. The data may be stored in database format or in other data structures depending on the implementation. The stored data may include, for example, transaction storage 520, UTXO storage 522, one or more array databases 524, and a blockchain storage 526.

The propagation service 510 manages network communications for the blockchain node 550. It may listen for transactions incoming via a IPv6 multicast network, for example. It may perform some gating on incoming transactions, such as basic validity checks like ensuring the transaction is formatted correctly, has non-zero inputs and outputs, and other such basic validity checks.

The transaction validation service 512 may validate a transaction according to the rules of the applicable blockchain protocol. It may, for example, verify that inputs consumed in the transaction are valid unspent outputs of a confirmed or unconfirmed transaction, e.g. a UTXO. The transaction validation service 512 may verify that a block is valid in part through referencing the UTXO storage 522 to verify that inputs are unspent. Validated transactions are passed to the block assembly service 514.

The transaction validation service 512 or a sub-service may mark any inputs to the transactions as spent in the UTXO storage 522. The validated transaction may be stored in the transaction storage 520.

The block assembly service 514 is responsible for creating new candidate blocks for miners associated with the blockchain node 550. The block assembly service 514 receives a stream or flow of validated transactions and assembles them into arrays of ordered transaction identifiers. As an array is completed, its Merkle root is calculated, it is added to the current candidate block, the Merkle root of the candidate block is updated, and the candidate block header is pushed to the miners. A newly-completed array is announced to other blockchain nodes over the computer networks 552.

The blockchain service 516 manages the block headers and arrays in a block and records block data in the blockchain storage 526. In some cases, the blockchain storage 526 may be a complete copy of the current blockchain. In some cases, the blockchain storage 526 may be metadata, such as block headers and array data including TxIDs, but excluding full transaction data.

In some cases, the array discussed above may be referred to as a sub-tree since its transaction identifiers form a portion of the total consolidated ordered list of transaction identifiers that may be in a candidate block, such that the transaction identifiers from the array may be used to find a part of the Merkle tree for the candidate block, *i.e.* a "sub-tree". Each array has a unique array identifier, or "sub-tree identifier", that is sent with the array when propagated to other blockchain nodes 504 over the blockchain network. The other nodes, having determined that they have seen and validated all transactions in the array may then store the array identifier in memory in association with the array data. Likewise, when the blockchain node 550 receives arrays from other blockchain nodes 504 it determines whether it has received and validated all the transactions listed in the array by transaction identifier and it then validates the Merkle root of the array and stores the array identifier in memory in association with the array data within the array database 524.

In the examples below, the block validation service 518 serves to verify the validity of a block announced by one of the other blockchain nodes 504. It listens for arrays communicated by other blockchain nodes 504 and carries out functions to compactly store the array data in a manner that enables fast and efficient validation of a block, if a solution is found. A block announcement from one of the other nodes 504 includes block header data and an ordered list of array identifiers from which the node can determine the block contents, provided it has already received the arrays corresponding to the array identifiers. The block solution may be referred to herein as a newly-solved block.

In order to enable large volume transaction processing, the node 550 must be able to quickly and efficiently handle incoming array data from other nodes, verify its validity, and, when a block solution is announced, quickly and accurately validate the block. To meet these challenges, the proposed block validation service 518 is ideally horizontally scalable and stores the array data in a structure and a manner that enables the node 550 to quickly validate a block once a solution is announced. In one such solution, the node 550 utilizes a transaction graph datastore 528 to map transaction data and interrelationships to enable verification of topological ordering once a solution is found. In another such solution, the node 550 utilizes a set of array transaction databases 530 that, for each array, track inputs to the transactions of the array from previous blocks or other arrays, and outputs from transactions of the array that are not consumed within the array.

### Transaction graph datastore

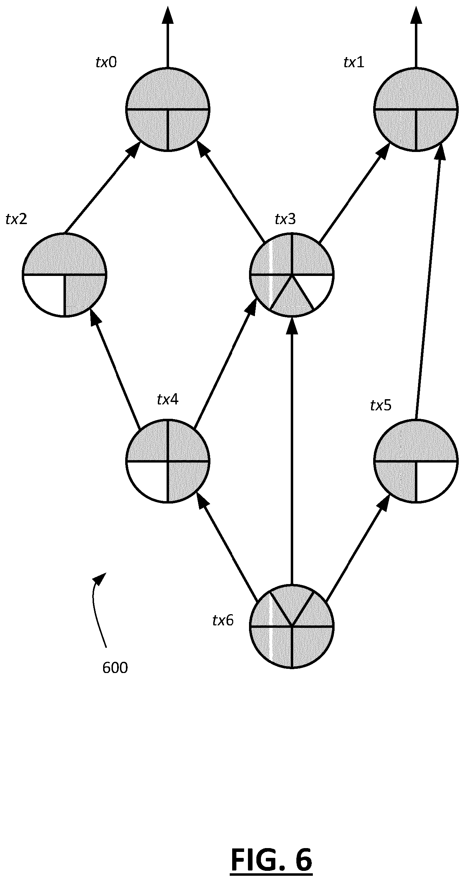

Figure 6 illustrates an example transaction graph 600. The graph 600 in this example includes seven transaction vertices labelled *tx*0, *tx*1, *tx*2, *tx*3, *tx*4, *tx*5, and *tx*6. The top half of each vertex (or node) shows one or more inputs to the transaction. The bottom half of each vertex (or node) shows one or more outputs from the transaction. Edges link inputs to outputs. The outputs shown in shading are consumed, *i.e.* they are "spent" outputs because they are used as an input to another transaction in the graph 600. The outputs that are shown in white are unspent, *i.e.* they are part of the UTXO set, because they have not yet been used as an input to a transaction in the graph 600.

Topological ordering provides that in the case where the parent(s) of a subject transaction appear in the same block, then the parent(s) of the subject transaction must appear earlier in the ordered set of transactions than the subject transaction.

A transaction graph 600 such as that shown in Figure 6 may be stored in a graph database. It may alternatively be stored as multiple HashMaps and linked lists or matrices representing vertices and edges. Other mechanisms or data structures for storing graph-like data based on vertices and nodes may also be used. Any such mechanisms may be referred to herein as a "graph datastore". In some of the examples below, the present application may refer to a graph database but it will be understood that the application is not limited to specific use of a graph database and may use other data structures or formats for storing such data. In this sense, the term "graph database" used in the present application may be considered equivalent to "graph datastore".

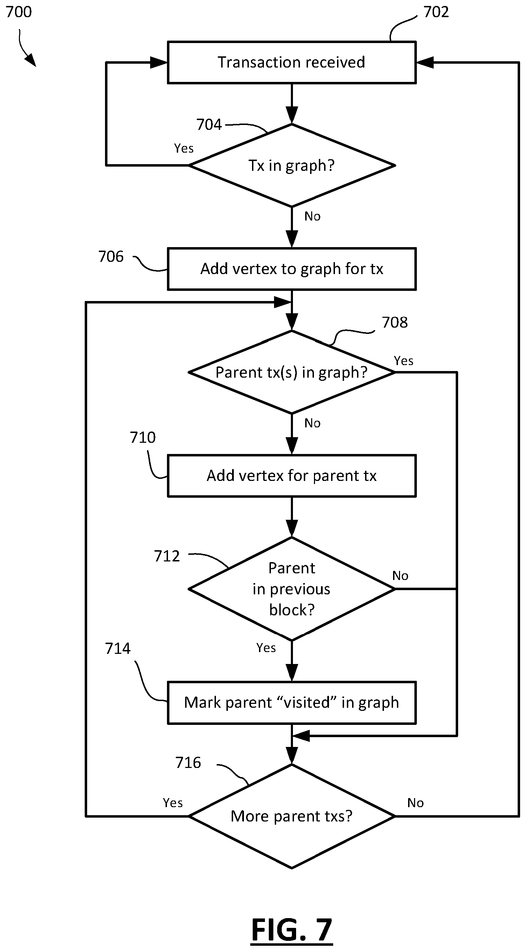

Reference is now made to Figure 7 which shows, in flowchart form, one example method 700 of building a graph database to enable fast block validation. The method 700 may be implemented by a blockchain node. The blockchain node may be implemented using one or more computing devices.

The method 700 begins with receipt of a new transaction as indicated by operation 702. Transactions may be received from other blockchain nodes. They may be received directly from non-blockchain nodes, such as point-of-sale devices, merchant computing devices, e-commerce platforms, user devices, or other computing devices.

In some cases, they may be received from another node within an array that contains an ordered list of transaction identifiers. If the array contains transaction identifiers that the blockchain node has not yet seen, it may request a copy of the transaction from the node that sent the array.

With each transaction, the blockchain node queries its graph service to determine whether the transaction has already been added to the graph, as shown by operation 704. If the transaction is already in the graph then there is nothing further that needs to be done and it returns to operation 702 to assess the next transaction. If the transaction is not in the graph, then in operation 706 the blockchain node updates the graph by adding a vertex to the graph for the transaction. This may include retrieving a copy of the transaction from a transaction database, where the blockchain node can access copies of unconfirmed but validated transactions.

In operation 708, the blockchain node evaluates whether a parent transaction of the current transaction is in the graph. A parent transaction is one that provides an output consumed as an input in the current transaction. If the parent transaction is already in the graph, then the node adds an edge linking the parent to the current transaction. If the parent is not in the graph, then the node adds a vertex for the parent transaction and an edge linking the parent transaction vertex to the current transaction vertex, as indicated by operation 710.

In operation 712, the node assesses whether the parent transaction was confirmed in a previous block, *i.e.* it is already on the blockchain. If so, then it marks the parent transaction vertex in the graph as "visited" in operation 714. Otherwise, it leaves it unmarked.

In operation 716, the node determines whether there are additional parent transactions to the current transaction. If so, it returns to operation 708 to ensure that the parent transaction is in the graph. If there are no further parent transactions to the current transaction, then the method 700 repeats with the next transaction.

If the graph is to be used to detect double-spends as well as topological ordering, then the graph database may record output indexes as well as the transaction identifiers for each vertex. If the graph is not used to detect double-spends then the vertices may only record transaction identifiers.

It will be appreciated that this method 700 runs continuously, building the graph as new transactions are received. Once a block solution is discovered by another node, then the graph can be used to confirm that the transactions in the solution are topologically ordered as part of the block validation process.

When a block solution is announced, the successful node may send a notification providing an ordered list of the arrays it previously announced that make up the block. A receiving node confirms that it has previously received and processed the arrays based on its array database. It then retrieves those arrays from the array database to build an ordered list of transaction identifiers for the newly-found block. If any array has not been previously received, it requests a copy from the successful node and goes through the process of adding that array to the array database, performing any transaction validation needed, and adding transactions to the graph database as described above in connection with Figure 7.

As noted above, block validation may include confirming that the transactions the block adhere to certain requirements for validity. In particular, the protocol may require that they be topologically ordered, meaning that a parent transaction must appear before any of its children in the ordered list of transaction identifiers. The graph database may aid in quickly determining whether a block is topologically ordered.

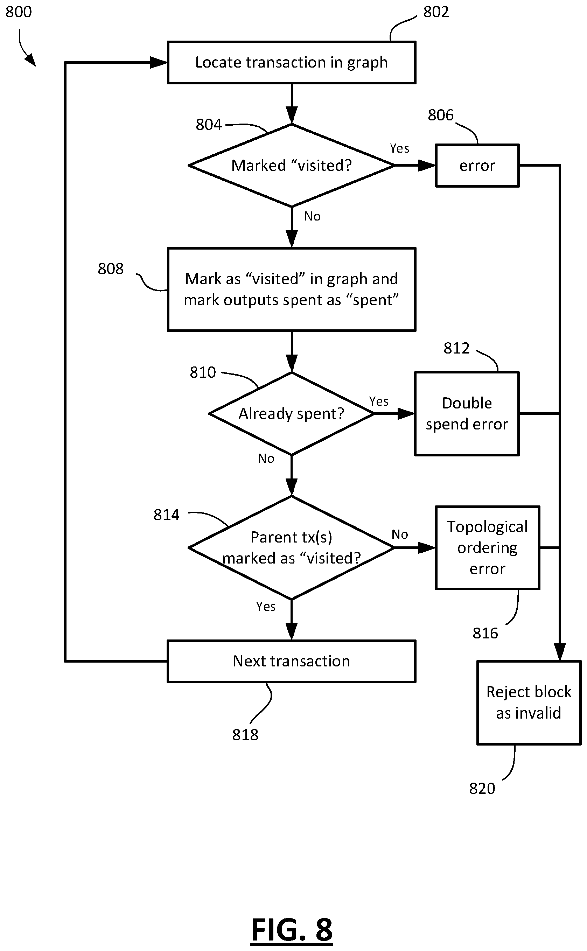

Figure 8 shows, in flowchart form, one example method 800 of validating a block solution using a transaction graph database. The method 800 may be carried out by a blockchain node that has received notice of a block solution from another node. This example method 800 employs a sequential approach. After building the ordered list of transaction identifiers, the node locates the first transaction in the list in the graph in operation 802. In operation 804, it verifies that the corresponding vertex it the graph is not marked visited. If it is marked visited, then there is an error, as indicated by operation 806.

Assuming no error is detected, the node marks the vertex for the transaction as "visited". If the graph further includes output indexes, then it also locates the parent transactions based on the edges linking parent vertexes to the current vertex and it marks the consumed outputs, e.g. UTXOs, as "spent". In operation 810, the node confirms that the consumed outputs were not already marked as "spent". If any of them is already marked spent, then the node has detected a double-spend error, as indicated by operation 812. The node also determines whether the parent transactions are marked "visited" in operation 814. Recall that any parent transaction from a prior block will already be marked "visited" during the building of the graph. Any parent transaction that is from the current ordered list of transactions ought to be marked "visited" based on it having appeared earlier in the ordered list. If a parent transaction is not marked visited then the node has detected a topological ordering error, as indicated by operation 816.

The detection of errors in operations 806, 812, or 816 may result in the node rejecting the block solution as invalid in operation 820. In some implementations, this may include transmitting a rejection message to the blockchain network. It may further include modifying the transaction graph database to revert to the transaction graph state prior to initiating the method 800 in which vertexes and output indexes were marked.

Assuming no errors are detected, in operation 818 the mode moves to the next transaction in the ordered list of transactions and returns to operation 802 to carry out the same process. This may continue until the end of the ordered list of transactions. Provided no errors are detected, then the node has confirmed the topological ordering of the transactions in the solved block. It may further have confirmed no double-spend errors, if it implements that feature. In some cases, double-spend detection may be implemented in another process of validation, such as during transaction validation.

If the block is determined to be valid, then the node may, in some cases, use the transaction graph to build an updated UTXO set for storage in an UTXO database. The node may go through each vertex in the graph that is marked "visited". If it has an output that is not marked as "spent" then that output is added to the UTXO set. If an output is marked as "spent" and is in the UTXO set, then it needs to be removed. If a transaction in the graph is not marked as visited, then its outputs should not be in the UTXO set.

In a variation of the above-described process, the block validation may be parallelized so that multiple processors may work on validating the block at once. To do so, the ordered set of transactions may be partitioned into slices. Each slice may have an associated slice identifier, *sliceID* from 0, 1, ..., *N*. The slices may correspond to the arrays in some implementations.

Each processor would use the transaction graph database to validate respective slices using the process described above. However, when marking a vertex as "visited", the processor would mark them as "visited + *sliceID*" to indicate in which slice the transaction is located. Accordingly, when evaluating a parent transaction, the node would assess whether the parent transaction is "visited" and whether the associated *sliceID* is the same or lower than the current *sliceID*. If the parent transaction is marked with a larger *sliceID* then it indicates that the parent transaction is in a later slice in the ordered set of transactions.

If the parent transaction is not marked as visited, then instead of detecting an error the node marks the parent transaction as "to-be-visited + *sliceID*", since it may mean that a processor dealing with an earlier slice containing that parent transaction has not yet processed it. When a processor encounters a vertex for a transaction that is marked "to-be-visited + *sliceID*" it determines whether the *sliceID* marked on the transaction is later (larger) than the current slice identifier and, if so, then it marks the vertex as "visited" plus the current slice identifier. Otherwise, it outputs an error because the transactions are not topologically ordered.

In some cases, where there are two or more children, it may be possible that a processor dealing with sliceA will look at a parent transaction that is already marked as to-be-visited + sliceB, meaning that another child transaction was processed within sliceB before the parent transaction was processed. The processor of slice A will leave it marked as "to-be-visited" but will update the marking of the parent transaction in the graph with sliceA if sliceA is earlier in the order than sliceB. Otherwise, it will leave it marked with sliceB. That is, it ensures that the parent is marked as "to-be-visited" plus which ever *sliceID* is earlier in the order.

At the end of the parallel processing, if there are any transactions in the graph still marked as "to-be-visited" then there is an error because the transaction is not in the block and not in a previous block, but is the parent of a transaction contained in the block.

It will be appreciated that the above-described parallelization could suffer from concurrency issues. A potential worst-case scenario results when all related transactions (parent-child relationships) are contained in different slices. To solve the potential concurrency issue from processing slices that contain respective related transactions, in one implementation the ordered set of transaction is not simply partitioned into non-overlapping slices. Rather, transactions are assigned to slices in such a way that related transactions are placed in the same slice.

To achieve this functionality, the transaction graph service or a further service may detect related transactions in the transaction graph. It may operate concurrently with the building of the graph to create a record of related transactions as the graph is being built. In some cases, a graph algorithm may be run, such as a depth first search (DFS) to identify all connected components of the graph. When validating a block, the service or record may be queried to identify related transactions and ensure that related transactions are not split across slices.

In one example, the node may be configured to generate an initial partitioning of the ordered set of transactions and then use the record of related transactions to perform a regrouping to move related transactions into the same slice. Mechanisms may be used to balance the allocation of related transactions across slices so they are not all put into one slice.

In another example, the node may begin assigning transactions to slices and, as each transaction is assigned, determining whether it is related to any other transactions based on the record. If so, then those related transactions are also assigned to the same slice. This continues until the slice has a certain number of transactions assigned to it, at which point the node begins assigning transactions to the next slice.

Rather than using the marking "visited + *sliceID*" or "to-be-visited + *sliceID*", the node would use the marking "visited + *pos*" or "to-be-visited + *pos*", where *pos* refers to the position of the transaction in the ordered list of transactions, *i.e.* and index to its position in the block.

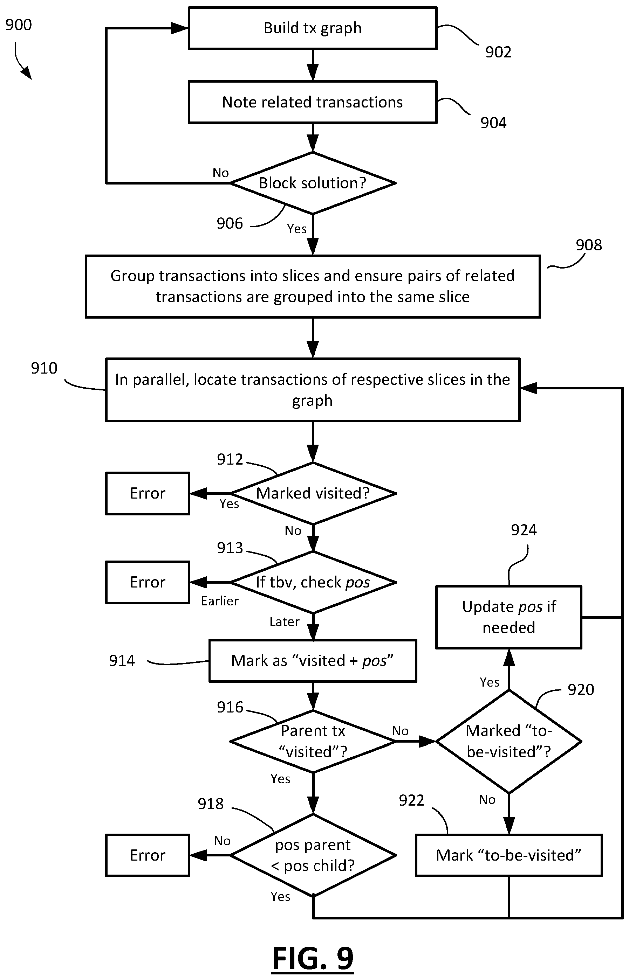

Reference is made to Figure 9, which shows one example method 900 for validating a block using parallel processing to confirm topological ordering. The method 900 includes building the transaction graph in operation 902 as transactions are received and validated by the node, and tracking or recording related transactions, as indicated by operation 904. If a block solution is received from another node in operation 906, then the node loads the corresponding arrays to build the ordered set of transaction identifiers for the solved block.

In operation 908, the node groups the transaction identifiers from the ordered set into slices. It does so in such a manner that it ensures any related transactions are included in the same slice. The number of slices may be dependent on the number of parallel processors available to process the slices in the next set of operations. The node may identify, for each transaction added to a slice, whether it has a related transaction in the graph and, if that transaction is also in the solved block, *i.e.* in the ordered set of transactions, then it is added to the same slice. The building of slices may include building sets of transaction identifiers with each also having their position index information from the ordered set.

In operation 910, the processors process the slices in parallel. Each processor processes its respective slice as described above, by locating each transaction in the transaction graph database and then, in operation 912, assessing whether it is marked "visited". If it is, then an error has occurred. If not, then in operation 913 the processor assesses whether the transaction is already marked "to-be-visited + *pos"*, which would have been applied when the transaction was evaluated as a parent to a child transaction that was already processed by one of the processors. The *pos* marked on the transaction with "to-be-visited" is the position of the child transaction. If the transaction is so marked, then the *pos* of the child transaction that is associated with the to-be-visited marking is compared to the current *pos* of the transaction. If the *pos* of the child is earlier (i.e. lower) than the *pos* of the current transaction then it indicates that the child appears earlier, which is a topographical ordering error. If the *pos* of the child is later, then the ordering is acceptable.

In operation 914, the processor marks the current transaction in the graph as "visited + *pos"* where the "pos" is the index position of the current transaction in the ordered set of transactions.

In operation 916, the processor determines whether the parent transaction(s) are marked as "visited + *pos"*. If it is marked visited then, in operation 918, the processor assesses whether the parent transaction's "pos" marking is earlier (lesser) than the "pos" position of the current transaction. That is, it determines, by comparing relative position indices for the parent transaction and the current transaction whether the parent appears earlier in the ordered set of transaction than the child transaction. If not, then there is an error.

If in operation 916 the processor finds that the parent transaction(s) are not marked as visited, then in operation 920 it assesses whether the parent transaction(s) are marked as "to-be-visited". If not, then in operation 922 it marks the parent transaction(s) as "to-be-visited + *pos"* where the "pos" is the index position of the current (child) transaction. If it already marked "to-be-visited", then in operation 924 the processor determines whether it should update the "pos" marking. If the "pos" indicated in the existing marking is higher than the current "pos", then the processor updates it. That is, the processor ensures that the "to-be-visited + *pos"* marking of the parent transaction uses the lowest (earliest) position index for children of that parent transaction.

At the end of the method 900, once the processors have processed all the slices, the node can assess whether there are any "to-be-visited" markings in the graph. If so, then it indicates an error in that there is a parent transaction that is not included in the block or in a previous block.

Although not shown in Figure 9, the parallel processing may further include tracking and marking the spending of UTXOs within the graph so as to try to detect possible double-spend attempts. However, in some implementations, that function may be carried out by another service, such as the transaction validation service.

In the optimistic case where all arrays are received and validated before a block solution is received, the node should be able to validate the block almost instantly. In these examples the node is still doing the work to go over all transactions of the solved block and to verify their ordering is compliant, since this would not have been done during the transaction validation phase or during array storage. During the graph building stage, the transaction graph query only checks to see if the transaction has already been included in the graph. It does not check topological ordering at that stage. To do so would have required recording the array identifier in which the transaction has been seen with the transaction vertex. This further means a separate transaction graph for each of the other blockchain nodes so that its array identifiers can be used to mark the transactions in the graph. However, this would have required a lot of write accesses to the database which is unscalable.

Whenever array of transactions is received, the graph needs to be read and if any of the transactions is not already there, the graph needs to be updated. In a high volume situation, the network may have a transaction flow of about 1 million transactions per second. In that case, 1 million writes per second to the database may be needed. Furthermore, in an example in which there are 29 other blockchain nodes in the network sending arrays they have assembled, the node may need to carry out 29 million reads per second to the db.

Suppose, on average, each transaction spends one output created in the current block and one output created in a previous block and that each transaction has two outputs. It can be assumed that transaction vertices are of size 40 B and edges are of size 36 B. It may be assumed that the graph contains about 600 million vertices for the transactions in the current block and about 600 million vertices for the transactions in the previous block that have an output spent in the current block. This implies that there are 1.2 billion edges in the graph, resulting in a graph database of about 70 GB in size.

If the transaction graph is not used to detect double spends, then transactions from previous blocks need not be included in the graph. Moreover, the size of the vertices and edges may be reduced as the node may no longer need to store any output index. This change would result in reducing the size of the database by about half.

***Multiple Array Databases***

In the above example, a node builds a transaction graph datastore and then, during the block validation stage, annotates the graph transaction-by-transaction to see if the transactions in a block are topologically ordered. In the examples below, the node builds a separate small array transaction database for each array received from another blockchain node. In addition to the array database, in which arrays themselves may be stored in full, each listing the transaction identifiers of that array in order, the array transaction database stores the inputs and outputs data for transactions in an array. In particular, the array transaction database stores the inputs (txID + output index) that are consumed in the array and that originate from transactions in other arrays, and the outputs created by the transactions in the array that are not consumed by another transaction in the array. The block validation can then be done in an efficient way once a block solution is found.

As with the examples above, there is a two-stage process. During the mining phase, the node builds an array transaction database for each array received from another node. The second stage is a block validation stage the occurs once the node receives a block solution from another node. In the block validation stage, the node verifies that the transactions in the solved block are topologically ordered based on the array transaction databases for the arrays in the block solution. The node may also confirm that there are no double-spend transactions within the solution. While the term "array transaction database" uses the term "database" it will be appreciated that it may use any suitable data structure for storing the data described below.

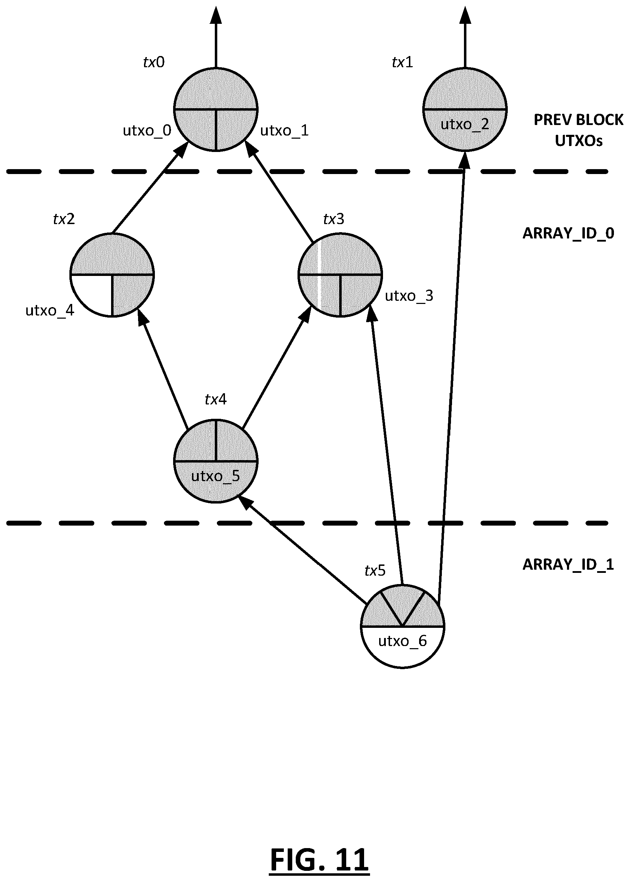

Figure 11 diagrammatically shows an example set of related transactions that span multiple arrays and a previous block. In this illustrative example, transactions *tx0* and *tx1* are in one or more previously confirmed blocks, *i.e.* they are already on chain. Transactions *tx2*, *tx3* and *tx4* are in the first array (ARRAY_ID_0) and transaction *tx5* is in the second array (ARRAY_ID_1).

When the first array is received, the node creates an array transaction database for the first array. It initializes the output list OUT_UTXO to list each output generated by a transaction in the array that is not consumed by an input to a transaction in the array. It also creates an input list to record inputs to transactions in the array that originate from transactions in a different array. Note that if the input originates from a prior block already on the blockchain, then the input is not listed in the inputs list for the array. Instead, a "prev_block" database or data structure is maintained that lists, for a given blockchain node, which outputs from prior blocks are consumed as inputs to transactions in that blockchain node's arrays. The previous block output database may have a "spent_by" field to record in which array the output is consumed as an input to a transaction in that array. In the array transaction databases, each output in the output list has a "spent_by" field to record in which other array the output is spent, if any. Each input in the input list has a "created_by" field to record which array contains the transaction that created the UTXO that is spent in this input.

Below are example data structures recording the relationships illustrated in Figure 11. The previous block output database may have a data structure like the following:

```
"PREV_BLOCK_UTXOS": {
    "utxo_0": {"spent_by": "ARRAY_ID_0"},
    "utxo_1": {"spent_by": "ARRAY_ID_0"},
    "utxo_2": {"spent_by": "ARRAY_ID_0"}
},
```

The first array transaction database may have a data structure like the following:

```
"ARRAY_ID_0":
    "IN_UTXO": [
        {
        }
    ],
    "OUT_UTXO": [
        {
            "utxo_3": {"spent_by": "ARRAY_ID_1"},
            "utxo_4": {"spent_by": ""},
            "utxo_5": {"spent_by": "ARRAY_ID_1"}
        }
    ]
},
```

The second array transaction database may have a data structure like the following:

```
"ARRAY_ID_1":
    "IN_UTXO": [
        {
            "utxo_3": {"created_in": "ARRAY_ID_0"},
            "utxo_5": {"created_in": "ARRAY_ID_0"},
        }
    ],
    "OUT_UTXO": [
        {
            "utxo_6": {"spent_by": ""},
        }
```

```
        ]
    }
```

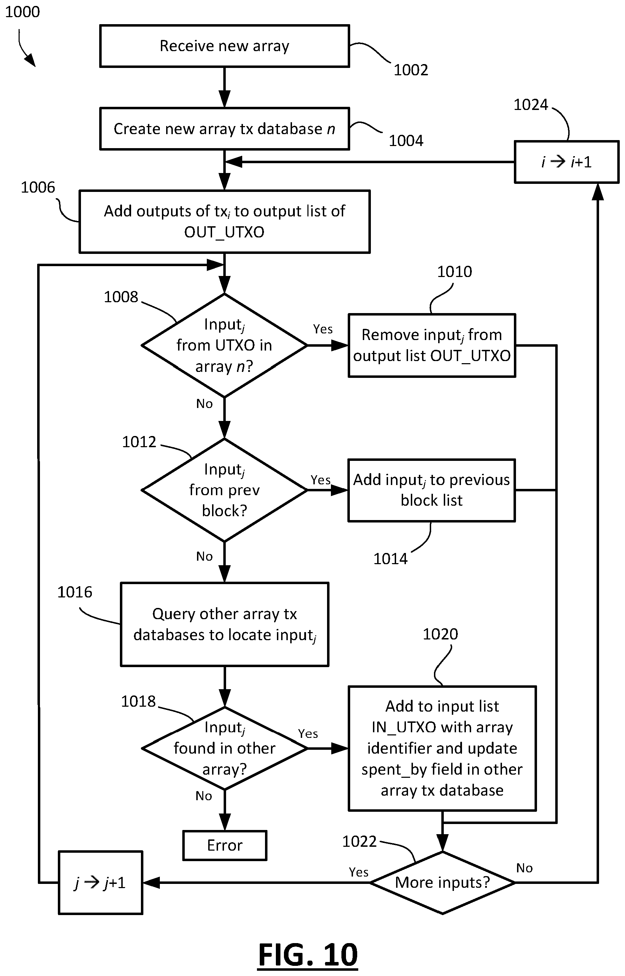

Reference will now also be made to Figure 10, which shows, in flowchart form, one example method 1000 of building a set of array transaction databases. The set of array transaction databases include a data structure for each array received from another node, each data structure storing input and output data for the transactions in the array in a form that retains only the needed information, resulting in a more compact and memory-efficient structure.

In operation 1002, the nodes receives a new array. If the new array includes transactions that are not already in the transaction database, the node obtains a copy of the transaction and the transaction validation service validates the transaction before adding to the transaction database. In operation 1004, the node creates a new array transaction database for the newly-received array. Starting with index i=0, the node processes the array transaction by transaction to build the array transaction database. In particular, in operation 1006, it adds the UTXOs created by transaction $tx_i$ to the output list OUT_UTXO. The "spent_by" field is left blank at this stage.

The node then goes through each input to the transaction. In operation 1008, it determines whether the input is from an output of another transaction in the same array. If so, then the output is both created and consumed within the array and in operation 1010, that output from the another transaction is removed from the output list OUT_UTXO. Because the node processes the transactions for the array in order, it can confirm that the transactions are topologically ordered because it would have already processed the parent transaction in the array and recorded its output in the output list before encountering the current child transaction that spends it as an input.

Assuming the input is not from a transaction in the same array, in operation 1012, the node determines whether the transaction input comes from a UTXO of a previous block, *i.e.* it is a UTXO of a confirmed transaction that is already on chain. If so, then it adds that input to the previous block database and records the fact it is "spent_by" a transaction in the current array by putting the array identifier in the "spent_by" field, as indicated by operation 1014.

In operation 1016, if the input to the transaction is not from an existing block or the current array, the node queries the other array transaction databases to determine whether it is from a transaction is a different array. If it is from another array, as indicated by operation 1018, then in operation 1020 the input list IN_UTXO of the current array is updated to include the utxo as an input and to record in which array it was created. The service handling the other array transaction database also updates its output list OUT_UTXO to record the fact that the utxo is "spent_by" a transaction in the current array.

If the utxo cannot be located in other arrays in operation 1018, then an error is returned.

When recording an array identifier to a "spent_by" field, the node may first determine that the field is NULL. If not, it may indicate a double-spend attempt and an error may be returned. The blockchain node that sent the double-spend attempt may be flagged as a malicious node and the current node may stop accepting arrays from that node.

If the array validation process builds the array transaction database and completes without any error, then it means that there is no double-spend among the transactions in the arrays received from a particular node. It also means that the unlocking scripts of transactions are valid and that the ordering in which transactions were received within an array follows a topological ordering. Additionally, this means that the array ordering is valid, that is parent transactions are included in an array that comes before the array in which child transactions in another array are included.

When a block is announced, if arrays in the block appear in the exact same order in which they have been received and no array is missing or has not been already validated, then the block can be immediately deemed as valid. However, there could be other situations where, for example, the block contains an array the node has not yet seen or the arrays may be in the block in a different order. The array transaction databases are structured in such a way that the block validation can be done effectively for any situation, as described below.

In some implementations, the transaction validation service may already reject double-spend transactions received from the same node, in which case the block validation service does not need to check for double-spend transactions. This means that the spent_by variable may not be needed in the array transaction database. Moreover, in such a situation the node may also forego building a previous block database. The array databases may further be simplified in this case by storing only the TxIDs, instead of the individual outputs (TxID + output index).

It should be recalled that this solution builds a set of array transaction databases specified to one other blockchain node. If a second other blockchain node sends arrays, then a separate set of array transaction databases is build specific to the arrays of that second other blockchain node. Separate processors may be used to build the respective sets of array transaction database, enabling parallelization.

If arrays are not received in the order in which they are included into the candidate block of the node, then they need to be reordered before being processed. By requiring arrays to be processed in order, the load on the array transaction database builder is reduced. When loading the spent outputs in the in_UTXO list of the array transaction database, the node should find the outputs in the previous arrays received. If it is not the case, the node can consider the array as invalid. If arrays are received in any order, then the outputs in the in_UTXO list might not be present in the other arrays at the time the array is received. Whenever a new array is received, the node would have to go through each of the

EP 4 560 514 B1

new outputs created and go over each output in the in_UTXO list of all the other arrays received before being able to fill in the created_in variable. This could create a lot of read accesses to the outputs in the in_UTXO list of the arrays.

Advantageously, if arrays are received in order, or at least have a specified order such that when building the array transaction databases the topological ordering of transaction is verified, when a block solution is announced, the block validation may be completed nearly immediately. The block may be determined to be validly topologically ordered if the order of arrays is the same as was specified previously. If the block solution contains an array that has not previously been received, then the node can go through the process of validating that array by building an array transaction database. If the block solution is missing one of the arrays that was previously announced, then the node takes steps to ensure that the missing array does not result in an error due to a missing parent transaction.

If a block solution does not contain the same ordered set of arrays that were previously announced by that node, then the current node performs block validation by (a) building an array transaction database for any newly-inserted array, and (b) assigning a processor to each array in the block solution. The processors fetch the list IN_UTXO of their respective arrays from the array transaction databases. For each outpoint recorded in the input list IN_UTXO, the array referenced in the created_in variable must appear before the current array in the block solution. If the array referenced does not appear at all in the block solution, it may be that the array was omitted from the block but another array that not previously received when the block was announced contains this output. To confirm this, whenever the array referenced in the created_in variable of an output is missing from the block solution, the processor queries any newly-inserted arrays and checks if the output is created in any of these. The matching array, if any, must appear before the current array in the block solution. This procedure may involve marking the arrays that were not previously received and validated before the block was announced.

The new UTXO set can be constructed by going through each output in the OUT_UTXO list of the arrays included in the block, and checking if they are spent or not.

In the block validation phase, many situations can happen, depending on whether all arrays have already been validated, whether they are reordered, etc. In particular, there are at least 8 scenarios:

1. The arrays in the announced block have already been validated, they appear in the same order as received in the array validation / array transaction database building phase.

2. The arrays in the announced block have already been validated but appear in a different order as received in the array validation / array transaction database building phase.

3. One or more previously-received and validated arrays are missing from the announced block.

4. The block contains one or more arrays that have not been previously received and validated before the block is announced.

5. Case 2 + 3.

6. Case 2 + 4.

7. Case 3 + 4.

8. Case 2 + 3 + 4.

Each of these eight scenarios may be handled by the node as follows:

Case 1: the block may be determined to be valid immediately.

Case 2: if the order is incorrect, then this would be detected by identifying that there is a UTXO within IN_UTXO whose created_in variable references an array that appears after the current array in the order of arrays in the block solution.

Case 3: the error that could occur here is that a transaction references an output in the missing array. If it is the case, then this would be detected by identifying that there is a UTXO whose created_in variable references the missing array.

Case 4: the error that could occur here is that a transaction in the new array is a double-spend transaction. When validating the new array, if a transaction in the array is a double-spend transaction, then this would be detected by noticing that there is already an array referenced in the spent_by variable of a spent output.

22

Case 5: is handled using the principles of cases 2 and 3.

Case 6: once all arrays in the announced block have been validated, then the node has determined that there is no double spend in the block, as explained in case 4. The correctness of the transaction ordering check follows the same principle as case 2.

Case 7: the error that could occur here is that there is a transaction in the new array that is a double-spend transaction of another transaction received from the node. There can be two situations. In one case, the other conflicting transaction is actually not present in the block because it is part of the missing array, in which case the block should be considered valid. In another case, the conflicting transaction is also present in the block, in which case the block should be considered invalid. This is checked when looking at the spent_by variable of an output and verifying that the referenced array is not present in the block. Once all arrays have been validated, the node can determine that there is no double spend. Another error that could occur is that a transaction references an output in the missing array. The node addresses this case by checking that the output is actually created in one of the new arrays.

Case 8: this is handled similar to case 7. The correctness of the transaction ordering follows from case 2.

It will be appreciated that cases 2-8 may be unusual in occurrence. In many cases, the solved block will be based on a set of arrays already announced by the other node and already validated and for which array transaction databases have been built and checked. Accordingly, under most circumstances, block validation in this case is nearly instantaneous.

Many of the above-described methods may be implemented using one or more computing devices each having one or more processing units, memory, and communications subsystems. Suitable software stored in memory and executable by the one or more processing units may configure the processing units to carry out the described functions or operations. In some cases, a microservices architecture may be used to implement some or all of the methods. While the operations described above are set out in a linear format, it will be appreciated that some implementations may at least partly parallelize some of the operations and/or carry them out in a different order without materially impacting operation of the methods.

The various embodiments presented above are merely examples and are in no way meant to limit the scope of this application. Variations of the innovations described herein will be apparent to persons of ordinary skill in the art, such variations being within the intended scope of the present application. In particular, features from one or more of the above-described example embodiments may be selected to create alternative example embodiments including a subcombination of features which may not be explicitly described above. In addition, features from one or more of the above-described example embodiments may be selected and combined to create alternative example embodiments including a combination of features which may not be explicitly described above. Features suitable for such combinations and sub-combinations would be readily apparent to persons skilled in the art upon review of the present application as a whole. The subject matter described herein and in the recited claims intends to cover and embrace all suitable changes in technology.

**Claims**

1. A computer-implemented method of validating a newly-solved block for a blockchain by a node, the method comprising:

   receiving, during a mining phase, from another node, two or more arrays, each array containing a respective set of transaction identifiers;
   building an array transaction database for each array, including, for a first array:

   a list of inputs to transactions in the first array that come from outputs of transactions in arrays other than the first array, and
   a list of outputs generated by transactions in the first array that are not consumed by any transaction in the first array;

   receiving notification of the newly-solved block from the another node, the notification specifying arrays included in the newly-solved block; and
   verifying whether an ordered list of transactions in the newly-solved block are topologically ordered based on the array transaction databases.

2. The method of claim 1, wherein building includes, for the first array, processing an ordered list of transactions in the first array in order, including adding newly-created outputs of each of the transactions to the list of outputs, determining that one or more of the newly-created outputs are used as inputs to one or more later transactions in the ordered list and, as a result, removing said one or more of the newly-created outputs from the list of outputs.

3. The method of claim 1 or claim 2, wherein building further includes building a previous block output database recording a list of outputs created in previous blocks that are consumed by transactions in one of the arrays, and wherein verifying further includes determining that no double-spends are present in the ordered list of transactions based on the previously block output database.

4. The method of claim 3, wherein building includes, for the first array, processing an ordered list of transactions in the first array in order, including determining that one of the inputs to one of the transactions is an output from a transaction in one of the previous blocks and, as a result, adding that output to the previous block output database.

5. The method of any one of claims 1 to 4, wherein building includes determining that an input to one of the transactions in the first array is not from another of the transactions in the first array or from one of the transactions in the previous blocks and, as a result, querying other arrays from the another node to locate the input in a transaction in one of the other arrays from the another node.

6. The method of claim 1, wherein building includes determining that an input to one of the transactions in the first array comes from an output of a transaction in a different array and, as a result, adding the input to the input list together with an identifier for the different array.

7. The method of claim 6, wherein the different array is associated with a second array transaction database that includes a second list of outputs generated by transactions in the second array, and wherein the method further comprises updating, in the second list of outputs, a field associated with the transaction in the different array to reference an identifier for the first array.

8. The method of any one of claims 1 to 7, wherein the receiving, during the mining phase, includes receiving the two or more arrays with data indicating an order of the two or more arrays and wherein the notification specifying arrays specifies a sequence that matches the order of the two or more arrays, and as a result, verifying includes determining that the newly-solved block is topologically ordered and valid.

9. The method of claim 8, wherein determining that the newly-solved block is topologically ordered and valid includes adding the newly-solved block to the blockchain.

10. The method of any one of claims 1 to 7, wherein the receiving, during the mining phase, includes receiving the two or more arrays with data indicating an order of the two or more arrays and wherein the notification specifying arrays specifies a sequence that does not match the order of the two or more arrays and, as a result, verifying includes determining whether the transactions in the newly-solved block are topologically ordered based on the list of inputs and the list of outputs for each array transaction database.

11. The method of any one of claims 1 to 10, wherein each entry in the list of inputs to transactions in the first array includes a respective array identifier specifying which of the two or more arrays contains a parent transaction providing the respective input identified in that entry.

12. The method of any one of claims 1 to 11, wherein at least one entry in the list of outputs contains an array identifier specifying one of the two or more arrays in which a child transaction spends an output identified in the at least one entry.

13. The method of any one of claims 1 to 12, wherein the array transaction database for the first array includes the list of inputs and the list of outputs and excludes any outputs generated by transactions in the first array and consumed by other transactions in the first array.

14. A computing device, the computing device including:

    one or more processors;
    memory; and

computer-executable instructions stored in the memory that, when executed by the one or more processors, cause the processors to carry out the method claimed in any one of claims 1 to 13.

15. A computer-readable medium storing processor-executable instructions, the processor-executable instructions including instructions that, when executed by one or more processors, cause the processors to carry out the method claimed in any one of claims 1 to 13.

**Patentansprüche**

1. Computerimplementiertes Verfahren zur Validierung eines neu gelösten Blocks für eine Blockchain durch einen Knoten, wobei das Verfahren Folgendes umfasst:

   Empfangen von zwei oder mehr Arrays von einem anderen Knoten während einer Mining-Phase, wobei jedes Array einen jeweiligen Satz von Transaktionskennungen enthält;
   Erstellen einer Array-Transaktionsdatenbank für jedes Array, die für ein erstes Array Folgendes beinhaltet:

   eine Liste von Eingaben in Transaktionen in dem ersten Array, die von Ausgaben von Transaktionen in anderen Arrays als dem ersten Array kommen, und
   eine Liste von Ausgaben, die durch Transaktionen in dem ersten Array generiert werden, die durch keine Transaktion in dem ersten Array verbraucht werden;
   Empfangen einer Benachrichtigung über den neu gelösten Block von dem anderen Knoten, wobei die Benachrichtigung Arrays spezifiziert, die in dem neu gelösten Block beinhaltet sind; und
   Verifizieren, ob eine geordnete Liste von Transaktionen in dem neu gelösten Block topologisch geordnet ist, basierend auf den Array-Transaktionsdatenbanken.

2. Verfahren nach Anspruch 1, wobei das Erstellen für das erste Array Verarbeiten einer geordneten Liste von Transaktionen in dem ersten Array der Reihe nach beinhaltet, das Hinzufügen neu erzeugter Ausgaben jeder der Transaktionen zu der Liste von Ausgaben, Bestimmen, dass eine oder mehrere der neu erzeugten Ausgaben als Eingaben in eine oder mehrere spätere Transaktionen in der geordneten Liste verwendet werden, und infolgedessen Entfernen der einen oder mehreren der neu erzeugten Ausgaben aus der Liste von Ausgaben beinhaltet.

3. Verfahren nach Anspruch 1 oder Anspruch 2, wobei das Erstellen ferner Erstellen einer vorherigen Blockausgabedatenbank beinhaltet, die eine Liste von Ausgaben aufzeichnet, die in vorherigen Blöcken erzeugt wurden und die durch Transaktionen in einem der Arrays verbraucht werden, und wobei das Verifizieren ferner Bestimmen, dass keine Doppelausgaben in der geordneten Liste von Transaktionen vorhanden sind, basierend auf der vorherigen Blockausgabedatenbank beinhaltet.

4. Verfahren nach Anspruch 3, wobei das Erstellen für das erste Array Verarbeiten einer geordneten Liste von Transaktionen in dem ersten Array der Reihe nach beinhaltet, das Bestimmen, dass eine der Eingaben in eine der Transaktionen eine Ausgabe aus einer Transaktion in einem der vorherigen Blöcke ist, und infolgedessen Hinzufügen dieser Ausgabe zu der vorherigen Blockausgabedatenbank beinhaltet.

5. Verfahren nach einem der Ansprüche 1 bis 4, wobei das Erstellen Bestimmen, dass eine Eingabe in eine der Transaktionen in dem ersten Array weder von einer anderen der Transaktionen in dem ersten Array noch von einer der Transaktionen in den vorherigen Blöcken stammt, und infolgedessen Abfragen anderer Arrays von dem anderen Knoten beinhaltet, um die Eingabe in einer Transaktion in einem der anderen Arrays von dem anderen Knoten zu lokalisieren.

6. Verfahren nach Anspruch 1, wobei das Erstellen Bestimmen, dass eine Eingabe in eine der Transaktionen in dem ersten Array von einer Ausgabe einer Transaktion in einem anderen Array stammt, und infolgedessen Hinzufügen der Eingabe zu der Eingabeliste zusammen mit einer Kennung für das andere Array beinhaltet.

7. Verfahren nach Anspruch 6, wobei das andere Array mit einer zweiten Array-Transaktionsdatenbank assoziiert ist, die eine zweite Liste von Ausgaben beinhaltet, die durch Transaktionen in dem zweiten Array generiert werden, und wobei das Verfahren ferner Aktualisieren eines Feldes, das mit der Transaktion in dem anderen Array assoziiert ist, in der zweiten Liste von Ausgaben beinhaltet, um auf eine Kennung für das erste Array zu verweisen.

# EP 4 560 514 B1

8. Verfahren nach einem der Ansprüche 1 bis 7, wobei das Empfangen während der Mining-Phase Empfangen der zwei oder mehr Arrays mit Daten beinhaltet, die eine Reihenfolge der zwei oder mehr Arrays angeben, und wobei die Benachrichtigung, die Arrays spezifiziert, eine Sequenz spezifiziert, die mit der Reihenfolge der zwei oder mehr Arrays übereinstimmt, und infolgedessen das Verifizieren Bestimmen beinhaltet, dass der neu aufgelöste Block topologisch geordnet und gültig ist.

9. Verfahren nach Anspruch 8, wobei das Bestimmen, dass der neu gelöste Block topologisch geordnet und gültig ist, Hinzufügen des neu gelösten Blocks zu der Blockchain beinhaltet.

10. Verfahren nach einem der Ansprüche 1 bis 7, wobei das Empfangen während der Mining-Phase Empfangen der zwei oder mehr Arrays mit Daten beinhaltet, die eine Reihenfolge der zwei oder mehr Arrays angeben, und wobei die Benachrichtigung, die Arrays spezifiziert, eine Sequenz spezifiziert, die nicht mit der Reihenfolge der zwei oder mehr Arrays übereinstimmt, und infolgedessen das Verifizieren Bestimmen, ob die Transaktionen in dem neu gelösten Block topologisch geordnet sind, basierend auf der Liste von Eingaben und der Liste von Ausgaben für jede Array-Transaktionsdatenbank beinhaltet.

11. Verfahren nach einem der Ansprüche 1 bis 10, wobei jeder Eintrag in der Liste von Eingaben in Transaktionen in dem ersten Array eine jeweilige Array-Kennung beinhaltet, die spezifiziert, welches der zwei oder mehr Arrays eine übergeordnete Transaktion enthält, die die jeweilige Eingabe bereitstellt, die in diesem Eintrag identifiziert ist.

12. Verfahren nach einem der Ansprüche 1 bis 11, wobei mindestens ein Eintrag in der Liste von Ausgaben eine Array-Kennung enthält, die eines der zwei oder mehr Arrays spezifiziert, in dem eine untergeordnete Transaktion eine Ausgabe ausgibt, die in dem mindestens einen Eintrag identifiziert ist.

13. Verfahren nach einem der Ansprüche 1 bis 12, wobei die Array-Transaktionsdatenbank für das erste Array die Liste von Eingaben und die Liste von Ausgaben beinhaltet und jegliche Ausgaben ausschließt, die durch Transaktionen in dem ersten Array generiert und durch andere Transaktionen in dem ersten Array verbraucht werden.

14. Rechenvorrichtung, wobei die Rechenvorrichtung Folgendes beinhaltet:

einen oder mehrere Prozessoren;
Speicher; und
computerausführbare Anweisungen, die in dem Speicher gespeichert sind und die, wenn sie von dem einen oder den mehreren Prozessoren ausgeführt werden, die Prozessoren veranlassen, das Verfahren nach einem der Ansprüche 1 bis 13 durchzuführen.

15. Computerlesbares Medium, das prozessorausführbare Anweisungen speichert, wobei die prozessorausführbaren Anweisungen Anweisungen beinhalten, die, wenn sie von einem oder mehreren Prozessoren ausgeführt werden, die Prozessoren veranlassen, das Verfahren nach einem der Ansprüche 1 bis 13 durchzuführen.

**Revendications**

1. Procédé mis en œuvre par ordinateur de validation d'un bloc nouvellement résolu pour une chaîne de blocs par un nœud, le procédé comprenant :

la réception, pendant une phase d'exploration, en provenance d'un autre nœud, de deux tableaux ou plus, chaque tableau contenant un ensemble respectif d'identifiants de transactions ;
la création d'une base de données de transactions de tableau pour chaque tableau, incluant, pour un premier tableau :

une liste d'entrées de transactions dans le premier tableau qui proviennent de sorties de transactions dans des tableaux autres que le premier tableau, et
une liste des sorties générées par des transactions dans le premier tableau qui ne sont consommées par aucune transaction dans le premier tableau ;
la réception d'une notification du bloc nouvellement résolu en provenance de l'autre nœud, la notification spécifiant des tableaux inclus dans le bloc nouvellement résolu ; et
la vérification pour savoir si une liste ordonnée de transactions dans le bloc nouvellement résolu est

26

ordonnée topologiquement sur la base des bases de données de transactions de tableau.

2. Procédé selon la revendication 1, dans lequel la création inclut, pour le premier tableau, le traitement d'une liste ordonnée de transactions dans le premier tableau dans l'ordre, incluant l'ajout de sorties nouvellement créées de chacune des transactions à la liste de sorties, la détermination qu'une ou plusieurs des sorties nouvellement créées sont utilisées comme entrées pour une ou plusieurs transactions ultérieures dans la liste ordonnée et, en conséquence, la suppression desdites une ou plusieurs des sorties nouvellement créées de la liste de sorties.

3. Procédé selon la revendication 1 ou la revendication 2, dans lequel la création inclut en outre la création d'une base de données de sorties de blocs précédente enregistrant une liste de sorties créées dans des blocs précédents qui sont consommées par des transactions dans l'un des tableaux, et dans lequel la vérification inclut en outre la détermination du fait qu'aucune double dépense n'est présente dans la liste ordonnée de transactions sur la base de la base de données de sorties de blocs précédente.

4. Procédé selon la revendication 3, dans lequel la création inclut, pour le premier tableau, le traitement d'une liste ordonnée de transactions dans le premier tableau dans l'ordre, incluant la détermination du fait que l'une des entrées de l'une des transactions est une sortie d'une transaction dans l'un des blocs précédents et, en conséquence, l'ajout de cette sortie à la base de données de sorties de blocs précédente.

5. Procédé selon l'une quelconque des revendications 1 à 4, dans lequel la création inclut la détermination du fait qu'une entrée de l'une des transactions dans le premier tableau ne provient pas d'une autre des transactions dans le premier tableau ou d'une des transactions dans les blocs précédents et, en conséquence, l'interrogation d'autres tableaux à partir de l'autre nœud pour localiser l'entrée dans une transaction dans l'un des autres tableaux en provenance de l'autre nœud.

6. Procédé selon la revendication 1, dans lequel la création inclut la détermination du fait qu'une entrée de l'une des transactions dans le premier tableau provient d'une sortie d'une transaction dans un tableau différent et, en conséquence, l'ajout de l'entrée à la liste d'entrée conjointement avec un identifiant pour le tableau différent.

7. Procédé selon la revendication 6, dans lequel le tableau différent est associé à une seconde base de données de transactions de tableau qui inclut une seconde liste de sorties générées par des transactions dans le second tableau, et dans lequel le procédé comprend en outre la mise à jour, dans la seconde liste de sorties, d'un champ associé à la transaction dans le tableau différent pour référencer un identifiant pour le premier tableau.

8. Procédé selon l'une quelconque des revendications 1 à 7, dans lequel la réception, pendant la phase d'exploration, inclut la réception des deux tableaux ou plus avec des données indiquant un ordre des deux tableaux ou plus et dans lequel la notification spécifiant des tableaux spécifie une séquence qui correspond à l'ordre des deux tableaux ou plus, et en conséquence, la vérification inclut la détermination que le bloc nouvellement résolu est topologiquement ordonné et valide.

9. Procédé selon la revendication 8, dans lequel la détermination que le bloc nouvellement résolu est topologiquement ordonné et valide inclut l'ajout du bloc nouvellement résolu à la chaîne de blocs.

10. Procédé selon l'une quelconque des revendications 1 à 7, dans lequel la réception, pendant la phase d'exploration, inclut la réception des deux tableaux ou plus avec des données indiquant un ordre des deux tableaux ou plus et dans lequel la notification spécifiant des tableaux spécifie une séquence qui ne correspond pas à l'ordre des deux tableaux ou plus et, en conséquence, la vérification inclut la détermination pour savoir si les transactions dans le bloc nouvellement résolu sont ordonnées topologiquement sur la base de la liste d'entrées et de la liste de sorties pour chaque base de données de transactions de tableau.

11. Procédé selon l'une quelconque des revendications 1 à 10, dans lequel chaque entrée dans la liste d'entrées de transactions dans le premier tableau inclut un identifiant de tableau respectif spécifiant lequel des deux tableaux ou plus contient une transaction parent fournissant l'entrée respective identifiée dans cette entrée.

12. Procédé selon l'une quelconque des revendications 1 à 11, dans lequel au moins une entrée dans la liste de sorties contient un identifiant de tableau spécifiant l'un des deux tableaux ou plus dans lequel une transaction enfant dépense une sortie identifiée dans l'au moins une entrée.

**13.** Procédé selon l'une quelconque des revendications 1 à 12, dans lequel la base de données de transactions de tableau pour le premier tableau inclut la liste d'entrées et la liste de sorties et exclut toute sortie générée par des transactions dans le premier tableau et consommée par d'autres transactions dans le premier tableau.

**14.** Dispositif informatique, le dispositif informatique comprenant :

un ou plusieurs processeurs ;
une mémoire ; et
des instructions exécutables par ordinateur stockées dans la mémoire qui, lorsqu'elles sont exécutées par le ou les plusieurs processeurs, amènent les processeurs à mettre en œuvre le procédé revendiqué dans l'une quelconque des revendications 1 à 13.

**15.** Support lisible par ordinateur stockant des instructions exécutables par un processeur, les instructions exécutables par un processeur comprenant des instructions qui, lorsqu'elles sont exécutées par un ou plusieurs processeurs, amènent les processeurs à mettre en œuvre le procédé selon l'une quelconque des revendications 1 à 13.

FIG. 1

152i

152j

202        $Tx_0$    201

$Tx_1$    201    203

| TxID_0 | |
|---|---|
| Input(s) | Output(s) |
| **Input**<br>• Pointer to previous $Tx$<br>• Index of UTXO in previous $Tx$<br>• Unlocking script for unlocking from previous party<br><br>⋮<br><br>Optional further inputs<br><br>⋮ | $UTXO_0$<br>• Amount<br>• Locking script locking to Alice<br><br><br>⋮<br><br>Optional further $UTXO$s<br><br>⋮ |

203

202

| TxID_1 | |
|---|---|
| Input(s) | Output(s) |
| **Input**<br>• Pointer to $Tx_0$<br>• Index of $UTXO_0$ [within $Tx_0$]<br>• Unlocking script for unlocking $UTXO_0$ from Alice<br><br>⋮<br><br>Optional further inputs<br><br>⋮ | $UTXO_1$<br>• Amount<br>• Locking script locking to Bob<br><br><br>⋮<br><br>Optional further $UTXO$s<br><br>⋮ |

203

Transaction
from Alice to Bob

↓

Validated by running: Alice's locking script (from output of $Tx_0$), together with Bob's unlocking script (as input to $Tx_1$). This checks that Bob's unlocking script in $Tx_1$ meets the condition(s) defined in Alice's locking script in $Tx_0$.

## FIG. 2

105

Client application

402

UI layer

401

Transaction
engine

403

**FIG. 3A**

500

**Client app (Alice)**

503

502

501

**FIG. 3B**

**FIG. 4**

**FIG. 5**

*tx*0

*tx*1

*tx*2

*tx*3

*tx*4

*tx*5

*tx*6

600

# FIG. 6

**FIG. 7**

**FIG. 8**

900

Build tx graph — 902

Note related transactions — 904

No ← Block solution? 906 ┐ Yes

Group transactions into slices and ensure pairs of related transactions are grouped into the same slice — 908

910 — In parallel, locate transactions of respective slices in the graph

912 — Marked visited? → Yes → Error
No

913 — If tbv, check *pos* → Earlier → Error
Later

914 — Mark as "visited + *pos*"

916 — Parent tx "visited"? → No → Marked "to-be-visited"? — 920
Yes                                           Yes → Update *pos* if needed — 924
                                              No

918 — pos parent < pos child? → No → Error
Yes                          922 — Mark "to-be-visited"

**FIG. 9**

1000

Receive new array — 1002

Create new array tx database $n$ — 1004

1024

$i \rightarrow i+1$

1006

Add outputs of $tx_i$ to output list of OUT_UTXO

1008

Input$_j$ from UTXO in array $n$?

Yes → 1010 — Remove input$_j$ from output list OUT_UTXO

No

1012

Input$_j$ from prev block?

Yes → Add input$_j$ to previous block list — 1014

No

1016 — Query other array tx databases to locate input$_j$

1018

Input$_j$ found in other array?

Yes → 1020 — Add to input list IN_UTXO with array identifier and update spent_by field in other array tx database

No

Error

1022 — More inputs?

Yes → $j \rightarrow j+1$

No

**FIG. 10**

*tx*0

utxo_0   utxo_1

*tx*1

utxo_2   PREV BLOCK
UTXOs

ARRAY_ID_0

*tx*2

utxo_4

*tx*3

utxo_3

*tx*4

utxo_5

ARRAY_ID_1

*tx*5

utxo_6

# FIG. 11